# EUROPEAN PATENT APPLICATION

(11) **EP 4 733 128 A1**
(43) Date of publication of application: **29.04.2026**
(21) Application number: 23943435.0
(22) Date of filing: 18.12.2023
(51) Int. Cl.: B60L 53/80, H01M 50/264, H01M 50/249

(54) **LOCKING MECHANISM, BATTERY ASSEMBLY, ELECTRICAL DEVICE, AND LOCKING APPARATUS**

(30) Priority: 27.06.2023 CN 202321653477 U
(71) Applicant: Contemporary Amperex Technology Co., Limited, Ningde, Fujian 352100 (CN)
(72) Inventor: WU, Kai, Ningde, Fujian 352100 (CN); CAO, Gen, Ningde, Fujian 352100 (CN); WU, Shouyong, Ningde, Fujian 352100 (CN); LI, Shuo, Ningde, Fujian 352100 (CN); WANG, Chunhui, Ningde, Fujian 352100 (CN)
(74) Representative: Gong, Jinping
(86) International application number: PCT/CN2023/139630
(87) International publication number: WO 2025/000962

(57) **Abstract**

This application provides a locking mechanism, a battery assembly, an electric device, and a locking apparatus, and pertains to the field of battery swapping technology. The locking mechanism includes a sleeve, a locking piece, an adjustment piece, and a fastening assembly. The locking piece is movably provided in the sleeve, the locking piece has a locked state and an unlocked state, and the locking piece is configured to snap into a lock base in the locked state and snap out of the lock base in the unlocked state, enabling the locking mechanism to engage with or disengage from the lock base along a first direction. The adjustment piece is rotatably connected within the sleeve rotatably about an axis extending along the first direction, where the adjustment piece is threadedly connected to the locking piece, and the adjustment piece is configured to drive, when rotating relative to the sleeve, the locking piece to move relative to the sleeve, so that the locking piece switches between the locked state and the unlocked state. The fastening assembly is configured to prevent the locking piece from moving relative to the adjustment piece in a direction from the adjustment piece toward the lock base along the first direction when the locking piece is in the locked state.

## Description

### CROSS-REFERENCE TO RELATED APPLICATIONS

This application claims priority to Chinese Patent Application No. 2023216534770, filed on June 27, 2023 and entitled "LOCKING MECHANISM, BATTERY ASSEMBLY, ELECTRIC DEVICE, AND LOCKING APPARATUS," which is incorporated herein by reference in its entirety.

### TECHNICAL FIELD

This application relates to the field of battery technologies, and more particularly, to a locking mechanism, a battery assembly, an electric device, and a locking apparatus.

### BACKGROUND

With technological advancements, the battery industry has developed rapidly, and the market share and use frequency of electric devices have been increasing. Electric vehicles and other electrically driven transportation means have gradually appeared in various application scenarios. Meanwhile, to enhance the convenience of electric devices, particularly electrically driven transportation means, battery swapping stations have emerged in the market for quick battery replacement. However, electric devices require frequent battery swapping operations. During the swapping process, the locking mechanism between the battery and the electric device needs to switch multiple times between locked and unlocked states to secure or release the battery from the electric device. Such frequent switching leads to wear or damage to the locking mechanism, resulting in a shorter service life and reduced reliability, which in turn causes inconvenience in battery swapping and potential safety hazards in usage.

### SUMMARY

Embodiments of this application provide a locking mechanism, a battery assembly, an electric device, and a locking apparatus, so as to effectively enhance the service life and reliability of the locking mechanism.

According to a first aspect, an embodiment of this application provides a locking mechanism configured to engage with or disengage from a lock base along a first direction. The locking mechanism includes a sleeve, an adjustment piece, and a fastening assembly, where the locking piece is movably provided in the sleeve, the locking piece has a locked state and an unlocked state, the locking piece is configured to snap into the lock base in the locked state to engage the locking mechanism with the lock base along the first direction, and the locking piece is configured to snap out of the lock base in the unlocked state to disengage the locking mechanism from the lock base along the first direction; the adjustment piece is connected within the sleeve rotatably about an axis extending along the first direction, where the adjustment piece is threadedly connected to the locking piece, and the adjustment piece is configured to drive, when rotating relative to the sleeve, the locking piece to move relative to the sleeve, so that the locking piece switches between the locked state and the unlocked state; and the fastening assembly is configured to prevent the locking piece from moving relative to the adjustment piece in a direction from the adjustment piece toward the lock base along the first direction when the locking piece is in the locked state.

In this technical solution, the locking mechanism is provided with the locking piece and the adjustment piece. By threadedly connecting the locking piece to the adjustment piece, rotation of the adjustment piece can drive the locking piece to move relative to the sleeve, so that the locking piece switches between the locked state and the unlocked state. This allows the locking piece to snap into or out of the lock base, thereby enabling the locking mechanism to engage with or disengage from the lock base along the first direction. Provided on the locking mechanism, the fastening assembly can prevent the locking piece from moving relative to the adjustment piece in the direction from the adjustment piece toward the lock base along the first direction when the locking piece is in the locked state. In other words, when the locking piece snaps into the lock base and the locking mechanism engages with the lock base along the first direction, the locking piece and the adjustment piece can be further locked under the action of the fastening assembly, preventing the locking piece from moving toward the lock base away from the adjustment piece, thereby further preventing the locking piece from disengaging from the adjustment piece along the first direction. The locking mechanism of this structure reduces the risk that the locking piece disengages from the adjustment piece when the locking piece snaps into the lock base, enhancing the stability and reliability of mutual locking between the locking mechanism and the lock base. In addition, the fastening assembly can transfer the force on the threaded structure between the locking piece and the adjustment piece to the fastening assembly, thereby relieving the problem of thread stripping or damage to the threaded structure between the locking piece and the adjustment piece. This reduces the risk of threaded connection failure between the locking piece and the adjustment piece, thereby helping improve the service life and reliability of the locking mechanism.

In some embodiments, the fastening assembly is provided on the locking piece, the adjustment piece has an abutment surface, and the fastening assembly is configured to abut against the abutment surface in the direction from the adjustment piece toward the lock base along the first direction when the locking piece is in the locked state.

In this technical solution, the fastening assembly is provided on the locking piece, and the adjustment piece has the abutment surface that abuts against the fastening assembly. In this case, when the locking piece is in the locked state, the fastening assembly can abut against the abutment surface in the direction from the adjustment piece toward the lock base along the first direction, thereby preventing the locking piece from moving in the direction from the adjustment piece toward the lock base along the first direction. This transfers the force on the threaded structure between the locking piece and the adjustment piece to the interface between the fastening assembly and the abutment surface of the adjustment piece, mitigating thread stripping or damage to the threaded structure between the locking piece and the adjustment piece.

In some embodiments, the locking piece has a mounting portion inserted into the adjustment piece along the first direction, and an inner surface of the adjustment piece includes the abutment surface; and the fastening assembly includes a snap-fit member movably provided on the mounting portion, where the snap-fit member is configured to abut against the abutment surface after protruding from an outer peripheral surface of the mounting portion or to leave the abutment surface after retracting into the mounting portion.

In this technical solution, the locking piece has the mounting portion inserted into the adjustment piece, and the abutment surface is located on the inner surface of the adjustment piece, so that the snap-fit member of the fastening assembly can abut against the abutment surface after protruding from the outer peripheral surface of the mounting portion. This enables the fastening assembly to prevent the locking piece from moving relative to the adjustment piece in a direction from the adjustment piece toward the lock base along the first direction. Conversely, when the snap-fit member of the fastening assembly retracts into the mounting portion, it leaves the abutment surface, allowing the locking piece to move relative to the adjustment piece. The structure is simple and easy to implement.

In some embodiments, the fastening assembly further includes a moving member provided within the mounting portion movably along the first direction, where the moving member is configured to: when moving relative to the mounting portion along the first direction, push the snap-fit member to protrude from the outer peripheral surface of the mounting portion or allow the snap-fit member to retract into the mounting portion, so that the snap-fit member abuts against or leaves the abutment surface.

In this technical solution, the fastening assembly further includes a moving member configured to: push the snap-fit member to protrude from the outer peripheral surface of the mounting portion or allow the snap-fit member to retract into the mounting portion. Provided within the mounting portion movably along the first direction, the moving member can push the snap-fit member to protrude from the outer peripheral surface of the mounting portion and prevent the snap-fit member from retracting, when moving relative to the mounting portion in one direction along the first direction. When the moving member moves relative to the mounting portion in an opposite direction along the first direction, it leaves the snap-fit member, allowing the snap-fit member to retract into the mounting portion, so that the snap-fit member abuts against or leaves the abutment surface.

In some embodiments, the adjustment piece is configured to drive, when rotating relative to the sleeve, the locking piece to move between a first position and a second position along the first direction, and the locking piece is in the locked state when located at the first position and in the unlocked state when located at the second position; where the adjustment piece is provided with an actuating portion configured to: abut against the moving member and push the moving member to move so that the moving member pushes the snap-fit member to protrude from the outer peripheral surface of the mounting portion; and when the locking piece moves from the first position to the second position, leave the moving member so that the moving member allows the snap-fit member to retract into the mounting portion.

In this technical solution, the adjustment piece can drive the locking piece to move relative to the sleeve along the first direction while switching the locking piece between the locked state and the unlocked state, so that the locking piece can be in the first position and the second position along the first direction. Provided on the adjustment piece, the actuating portion can abut against and push the moving member to move when the locking piece moves from the second position to the first position, so that the snap-fit member protrudes from the outer peripheral surface of the mounting portion under the push of the moving member. Additionally, the actuating portion can leave the moving member when the locking piece moves from the first position to the second position, releasing the constraint on the moving member, so that the moving member allows the snap-fit member to retract into the mounting portion. In this way, the snap-fit member of the fastening assembly can protrude from the outer peripheral surface of the mounting portion or retract into the mounting portion through coordination with the moving member and the actuating portion while the locking piece moves along the first direction to switch between the locked state and unlocked state. This achieves linkage within the locking mechanism without requiring additional driving mechanisms or manual intervention, simplifying operation of the locking mechanism.

In some embodiments, the actuating portion and the mounting portion are arranged along the first direction, an end of the actuating portion facing the mounting portion is provided with a protruding portion, and the protruding portion is configured to be inserted into the mounting portion to abut against the moving member.

In this technical solution, the protruding portion is provided at the end of the actuating portion facing the mounting portion along the first direction, so that the protruding portion can be inserted into the mounting portion to abut against the moving member when the mounting portion approaches the actuating portion along the first direction. This helps the actuating portion in pushing the moving member to move.

In some embodiments, an accommodating cavity is formed inside the mounting portion, the accommodating cavity penetrates an end of the mounting portion close to the actuating portion along the first direction, and the accommodating cavity is configured to accommodate the protruding portion; where the moving member is provided within the accommodating cavity movably along the first direction, a mounting hole is provided on the outer peripheral surface of the mounting portion, the mounting hole communicates with the accommodating cavity, and the snap-fit member is movably provided within the mounting hole.

In this technical solution, the accommodating cavity is provided inside the mounting portion to accommodate the moving member, and the accommodating cavity penetrates one end of the mounting portion along the first direction, so that the protruding portion of the actuating portion can be inserted into the accommodating cavity and abut against the moving member, simplifying the structure of the locking mechanism. Additionally, the mounting hole communicating with the accommodating cavity is provided on the outer peripheral surface of the mounting portion and the snap-fit member is movably provided within the mounting hole. In this way, the moving member can push the snap-fit member to protrude from the outer peripheral surface of the mounting portion through the mounting hole or allow the third snap-fit member to retract into the mounting portion through the mounting hole, when moving along the first direction within the accommodating cavity. The structure is simple and easy to implement.

In some embodiments, the fastening assembly further includes a first elastic member provided between the moving member and the mounting portion, and the first elastic member is configured to drive the moving member to move along the first direction toward the actuating portion, so that the moving member allows the snap-fit member to retract into the mounting portion.

In this technical solution, the first elastic member is provided between the moving member and the mounting portion, and the first elastic member applies a force to the moving member along the first direction toward the actuating portion, so that the moving member can automatically return to a position allowing the snap-fit member to retract into the mounting portion after retracting from the actuating portion. This relieves the problem that the snap-fit member mistakenly abuts against the abutment surface of the adjustment piece due to reset failure of the moving member, and eliminates the need for manual intervention, facilitating operation and use.

In some embodiments, a first limiting portion is provided inside the mounting portion, the moving member is provided with a second limiting portion, and the first limiting portion and the second limiting portion cooperate to restrict the range of movement of the moving member relative to the mounting portion along the first direction.

In this technical solution, the first limiting portion and the second limiting portion are provided on the mounting portion and the moving member respectively. The cooperation between the first limiting portion and the second limiting portion restricts the range of movement of the moving member relative to the mounting portion along the first direction. This allows for precise switching of the moving member along the first direction between a position where the snap-fit member is pushed to protrude from the outer peripheral surface of the mounting portion and a position where the snap-fit member is allowed to retract into the mounting portion, so that the snap-fit member can abut against and leave the abutment surface more precisely. In addition, the position of the moving member is limited to some extent, reducing the risk of the moving member detaching from the mounting portion.

In some embodiments, the first limiting portion is a limiting block provided on an inner peripheral surface of the mounting portion, the second limiting portion is a groove provided on an outer peripheral surface of the moving member, and at least a portion of the limiting block is accommodated in the groove.

In this technical solution, the first limiting portion and the second limiting portion are respectively a limiting block provided on the inner peripheral surface of the mounting portion and a groove provided on the outer peripheral surface of the moving member. Inserted into the groove, the limiting block can abut against two opposite sidewalls of the groove along the first direction when the moving member moves relative to the mounting portion, thereby restricting the range of movement of the moving member along the first direction through the cooperation of the limiting block and the groove. The structure is simple, easy to implement, and highly stable.

In some embodiments, the first limiting portion is an annular limiting block extending along a circumferential direction of the moving member, and the second limiting portion is an annular groove extending along the circumferential direction of the moving member.

In this technical solution, both the first limiting portion and the second limiting portion are configured as annular structures, so that the first limiting portion and the second limiting portion cooperate in restricting the moving member more stably and reliably.

In some embodiments, a guide slope is formed on the moving member, and the guide slope is configured to abut against the snap-fit member to push the snap-fit member to protrude from the outer peripheral surface of the mounting portion.

In this technical solution, the guide slope is provided on the moving member for abutting against the snap-fit member, so that the snap-fit member can be guided by the guide slope to protrude from the outer peripheral surface of the mounting portion when the moving member moves along the first direction. This facilitates the moving member in driving the snap-fit member to protrude from the outer peripheral surface of the mounting portion or allowing the snap-fit member to retract into the mounting portion. The locking mechanism of such structure reduces jams between the moving member and the snap-fit member.

In some embodiments, the fastening assembly includes a plurality of snap-fit members, and the plurality of snap-fit members are spaced apart along a circumferential direction of the mounting portion.

In this technical solution, the fastening assembly is provided with a plurality of snap-fit members spaced apart along the circumferential direction of the mounting portion, so that when the plurality of snap-fit members protrude from the outer peripheral surface of the mounting portion, they form a structure surrounding the mounting portion. This further enhances the structural stability and reliability of the abutment between the fastening assembly and the adjustment piece, helping the fastening assembly to better absorb part of the force applied on the threaded structure between the locking piece and the adjustment piece.

In some embodiments, the snap-fit member is spherical.

In this technical solution, the snap-fit member has a spherical structure. This facilitates the moving member, when moving along the first direction, in pushing the snap-fit member to protrude from the outer peripheral surface of the mounting portion or allowing the snap-fit member to retract into the mounting portion, so as to reduce jams between the moving member and the snap-fit member.

In some embodiments, the locking piece includes the connecting portion and the snap-fit portion. The connecting portion extends along the first direction and is inserted into the sleeve, and the connecting portion is threadedly connected to the adjustment piece. The snap-fit portion is located outside the sleeve and connected to an end of the connecting portion away from the sleeve, where the snap-fit portion protrudes along its extending direction from an outer peripheral surface of the connecting portion, the snap-fit portion is configured to engage with the lock base, and the extending direction of the snap-fit portion is perpendicular to the first direction; where the adjustment piece is capable of driving the connecting portion to rotate through rotating relative to the sleeve, so that the snap-fit portion engages with or disengages from the lock base and the locking piece switches between the locked state and the unlocked state.

In this technical solution, the locking piece is provided with the connecting portion and the snap-fit portion connected to one end of the connecting portion, with the snap-fit portion protruding along its extending direction from the outer peripheral surface of the connecting portion. With the connecting portion inserted into the sleeve along the first direction and threadedly connected to the adjustment piece, rotation of the adjustment piece can drive the connecting portion to rotate so that the snap-fit portion rotates along with the connecting portion, thereby changing the extending direction of the snap-fit portion in a plane perpendicular to the first direction. In this way, the snap-fit portion engages with or disengages from the lock base after rotation, thereby allowing the locking mechanism to engage with or disengage from the lock base along the first direction.

In some embodiments, the sleeve is provided with a third limiting portion, the connecting portion is provided with a fourth limiting portion, and the third limiting portion and the fourth limiting portion cooperate to restrict a rotation angle of the connecting portion.

In this technical solution, provided on the sleeve and the connecting portion, the third limiting portion and the fourth limiting portion can cooperate to restrict the rotation angle of the connecting portion, so that the connecting portion drives the snap-fit portion to engage with or disengage from the lock base under the cooperation between the third limiting portion and the fourth limiting portion. This facilitates switching of the locking piece between the locked state and the unlocked state, featuring simple structure and ease of operation. In addition, this can relieve the problem that the snap-fit portion fails to engage with the lock base due to excessive rotation along with the connecting portion, thereby enhancing the reliability of mutual locking between the locking mechanism and the lock base.

In some embodiments, the third limiting portion and the fourth limiting portion are further configured to cooperate to guide the connecting portion to move along the first direction when the adjustment piece rotates relative to the sleeve, so that the locking piece moves between the first position and the second position along the first direction; where the locking piece is in the locked state when located at the first position, so that snap-fit portion engages with the lock base; and the locking piece is in the unlocked state when located at the second position, so that the snap-fit portion disengages from the lock base.

In this technical solution, the third limiting portion and the fourth limiting portion, while restricting the rotation angle of the connecting portion, can further cooperate to guide the connecting portion to move relative to the sleeve along the first direction, so that the adjustment piece drives the connecting portion to rotate relative to the sleeve while further driving the locking piece to move between the first position and the second position along the first direction. In this way, the adjustment piece can drive the snap-fit portion to engage with the lock base while enabling the snap-fit portion to abut against the lock base, reducing the gap between the snap-fit portion and the lock base, thereby mitigating vibration between the locking mechanism and the lock base.

In some embodiments, the third limiting portion is a limiting groove provided on an inner peripheral surface of the sleeve, the fourth limiting portion is a protrusion provided on an outer peripheral surface of the connecting portion, and at least a portion of the protrusion is accommodated in the limiting groove.

In this technical solution, the third limiting portion and the fourth limiting portion are respectively a limiting groove provided on the inner peripheral surface of the sleeve and a protrusion provided on the outer peripheral surface of the connecting portion. With the protrusion inserted into the limiting groove, under the restriction of the limiting groove, the rotation angle of the connecting portion is restricted, and the protrusion can be guided by the limiting groove to enable the connecting portion to move along the first direction while rotating relative to the sleeve. The structure is simple, easy to implement, and highly stable.

In some embodiments, the limiting groove includes a first groove segment, a second groove segment, and a third groove segment connected in sequence, where the first groove segment and the third groove segment both extend along the first direction, the first groove segment and the third groove segment are spaced apart along a circumferential direction of the connecting portion, and the first groove segment and the third groove segment are spaced apart along the first direction, and along the first direction, the third groove segment is closer to the snap-fit portion than the first groove segment; where the protrusion is located in the first groove segment when the locking piece is located at the first position, and the protrusion is located in the third groove segment when the locking piece is located at the second position.

In this technical solution, the first groove segment and the third groove segment of the limiting groove are both configured to extend along the first direction, and the first groove segment and the third groove segment are spaced apart both along the first direction and the circumferential direction of the connecting portion, so that the second groove segment connecting the first groove segment and the third groove segment forms a helical groove. In this way, the protrusion of the connecting portion moves along the first direction only following the extending direction of the first groove segment and the second groove segment when located between the first groove segment and the third groove segment, and rotates relative to the sleeve while moving along the first direction following the extending direction of the second groove segment when located therein. This restricts the rotation angle of the locking piece and allows it to move between the first position and the second position along the first direction. Additionally, the third groove segment is configured to be closer to the snap-fit portion than the first groove segment along the first direction. In this case, when the protrusion is located in the first groove segment, the snap-fit portion can engage with the lock base while being closer to the sleeve, allowing the snap-fit portion to abut against the lock base along the first direction.

In some embodiments, the adjustment piece includes a connecting segment provided within the sleeve, the connecting segment is sleeved outside the connecting portion, and the connecting segment is threadedly connected to the connecting portion.

In this technical solution, the adjustment piece has the connecting segment threadedly connected to the outside of the connecting portion, allowing for the threaded connection between the locking piece and the adjustment piece. In this case, the adjustment piece can drive the connecting portion to rotate together, and when the circumferential rotation of the connecting portion is restricted, the adjustment piece can provide a feed force for the connecting portion along the first direction to enable the connecting portion to move along the first direction. The structure is simple and easy to implement.

In some embodiments, the locking mechanism further includes a securing assembly provided between the sleeve and the adjustment piece, where the securing assembly is configured to selectively lock the adjustment piece with the sleeve to prevent the adjustment piece from rotating relative to the sleeve.

In this technical solution, the locking mechanism is further provided with the securing assembly. With the securing assembly provided between the sleeve and the adjustment piece, the adjustment piece can be selectively locked with the sleeve. When the securing assembly unlocks the sleeve and the adjustment piece, the securing assembly allows the adjustment piece to rotate relative to the sleeve, driving the locking piece to move relative to the sleeve, enabling the locking piece to snap into or out of the lock base. When the securing assembly locks the sleeve and the adjustment piece, the securing assembly can control rotation of the adjustment piece relative to the sleeve. This can reduce the risk of the locking piece failing to snap into the lock base due to unexpected rotation of the adjustment piece, enhancing the effects of locking between the locking piece and the lock base and helping improve the stability and reliability of mutual locking between the locking mechanism and the lock base.

In some embodiments, the securing assembly includes a first clutch member and a second clutch member, where the first clutch member is provided on the sleeve and the second clutch member is provided on the adjustment piece. The first clutch member and the second clutch member are configured to: when engaged with each other, prevent the adjustment piece from rotating relative to the sleeve; and when disengaged from each other, allow the adjustment piece to rotate relative to the sleeve.

In this technical solution, the securing assembly is provided with the first clutch member and the second clutch member capable of engaging with or disengaging from each other. Provided on the sleeve and the adjustment piece respectively, the first clutch member and the second clutch member are engaged with each other to prevent the adjustment piece from rotating relative to the sleeve, and disengaged from each other to allow the adjustment piece to rotate relative to the sleeve. In this way, the securing assembly can selectively lock the adjustment piece with the sleeve.

In some embodiments, the first clutch member and the second clutch member are arranged along the first direction; where the first clutch member is fixed to the sleeve, the second clutch member is circumferentially locked with the adjustment piece, and the second clutch member is provided on the adjustment piece movably along the first direction, so that the second clutch member is able to engage with or disengage from the first clutch member.

In this technical solution, the first clutch member and the second clutch member are arranged along the first direction, with the second clutch member provided on the adjustment piece movably along the first direction. With the first clutch member fixed to the sleeve and the second clutch member configured to be circumferentially locked with the adjustment piece, the first clutch member can engage with or disengage from the first clutch member simply by moving the second clutch member, so as to prevent or permit rotation of the adjustment piece relative to the sleeve. This securing assembly is simple in structure and easy to operate and implement.

In some embodiments, the adjustment piece includes a guide segment provided within the sleeve, the second clutch member is sleeved outside the guide segment movably along the first direction, an outer peripheral surface of the guide segment is provided with a first circumferential limiting portion, an inner peripheral surface of the second clutch member is provided with a second circumferential limiting portion, and the second circumferential limiting portion cooperates with the first circumferential limiting portion to achieve circumferential locking of the second clutch member with the adjustment piece.

In this technical solution, the adjustment piece is provided with the guide segment, and the second clutch member is sleeved outside the guide segment movably along the first direction. By providing the first circumferential limiting portion on the outer peripheral surface of the guide segment and the second circumferential limiting portion on the inner peripheral surface of the second clutch member that cooperates with the first circumferential limiting portion, the second clutch member can move relative to the adjustment piece along the first direction while being circumferentially locked.

In some embodiments, the first circumferential limiting portion is a spline extending along the first direction, and the second circumferential limiting portion is a spline groove matching the spline.

In this technical solution, the first circumferential limiting portion and the second circumferential limiting portion are configured as the spline and the spline groove extending along the first direction. Specifically, the outer peripheral surface of the guide segment of the adjustment piece is provided with the spline extending along the first direction, and the inner peripheral surface of the second clutch member is provided with the spline groove matching the spline. This allows the second clutch member to be circumferentially locked with the adjustment piece while movable relative to the adjustment piece along the first direction. The structure is simple and highly stable.

In some embodiments, along the first direction, an end of the first clutch member facing the second clutch member is provided with a first toothed portion, and an end of the second clutch member facing the first clutch member is provided with a second toothed portion, and the second toothed portion is configured to engage with the first toothed portion to engage the second clutch member with the first clutch member.

In this technical solution, the first toothed portion is provided at the end of the first clutch member facing the second clutch member and the second toothed portion is provided at the end of the second clutch member facing the first clutch member, so that the second toothed portion can engage with or disengage from the first toothed portion when the second clutch member moves along the first direction, achieving engagement or disengagement of the second clutch member with the first clutch member. This allows the first clutch member and the second clutch member to cooperate to prevent the adjustment piece from rotating relative to the sleeve when the first toothed portion and the second toothed portion are engaged. The structure is simple and easy to implement. Additionally, providing the first toothed portion and the second toothed portion on the first clutch member and the second clutch member simplifies the engagement and disengagement between the first clutch member and the second clutch member.

In some embodiments, along the first direction, a first inclined surface is formed at an end of the first clutch member facing the second clutch member, a second inclined surface is formed at an end of the second clutch member facing the first clutch member, and the second inclined surface mates with the first inclined surface; where the first toothed portion is provided on the first inclined surface, and the second toothed portion is provided on the second inclined surface.

In this technical solution, the first inclined surface is provided at the end of the first clutch member facing the second clutch member and the first toothed portion is provided on the first inclined surface. Correspondingly, the second inclined surface mating with the first inclined surface is provided at the end of the second clutch member facing the first clutch member and the second toothed portion is provided on the second inclined surface. This structure is an inclined structure in which the first toothed portion and the second toothed portion mate with each other, providing guidance for facilitating engagement between the first toothed portion and the second toothed portion.

In some embodiments, the first inclined surface is a concave surface provided on the first clutch member, and the second inclined surface is a convex surface provided on the second clutch member.

In this technical solution, the first inclined surface is set as a concave surface and the second inclined surface is set as a convex surface, so that the second clutch member can be inserted into the first clutch member when the second toothed portion of the second clutch member engages with the first toothed portion of the first clutch member, enhancing the stability and reliability of the engagement between the second clutch member and the first clutch member, and reducing the possibility of slippage during engagement between the second clutch member and the first clutch member.

In some embodiments, the securing assembly further includes a second elastic member provided between the sleeve and the second clutch member, and the second elastic member is configured to drive the second clutch member to move along the first direction toward the first clutch member, so that the second clutch member engages with the first clutch member.

In this technical solution, the securing assembly is further provided with the second elastic member provided between the sleeve and the second clutch member. The second elastic member can apply a force to the second clutch member along the first direction toward the first clutch member, allowing for engagement between the first clutch member and the second clutch member. The securing assembly of such structure further enhances the stability of engagement between the first clutch member and the second clutch member, reducing the possibility of unexpected disengagement between the second clutch member and the first clutch member. In addition, the second clutch member and the first clutch member can engage automatically via the second elastic member after disengagement, without requiring manual intervention, achieving ease of operation and use.

According to a second aspect, an embodiment of this application further provides a battery assembly including a battery and the foregoing locking mechanism, where the locking mechanism is mounted on the battery.

According to a third aspect, an embodiment of this application further provides an electric device including a lock base and the forgoing battery assembly; where the locking mechanism is configured to engage with or disengage from the lock base along a first direction, and the battery is configured to supply electric energy.

According to a fourth aspect, an embodiment of this application further provides a locking apparatus including a lock base and the foregoing locking mechanism; where the locking mechanism is configured to engage with or disengage from the lock base along a first direction.

### BRIEF DESCRIPTION OF DRAWINGS

To more clearly illustrate the technical solutions of the embodiments of this application, the drawings required for use in the embodiments are briefly described below. It should be understood that the drawings described below are only some embodiments of this application and should not be regarded as limiting the scope. Those of ordinary skill in the art can obtain other drawings based on these drawings without creative effort.
FIG. 1 is a schematic structural diagram of a vehicle according to some embodiments of this application;
FIG. 2 is a schematic diagram of a partial structure of a vehicle according to some embodiments of this application;
FIG. 3 is an exploded view of a partial structure of a vehicle according to some embodiments of this application;
FIG. 4 is an exploded view of a structure of a battery according to some embodiments of this application;
FIG. 5 is a schematic structural diagram of a locking mechanism according to some embodiments of this application;
FIG. 6 is an exploded view of a structure of a locking mechanism according to some embodiments of this application;
FIG. 7 is a cross-sectional view of a locking mechanism (with the locking piece in the locked state) according to some embodiments of this application;
FIG. 8 is an enlarged view of position A of the locking mechanism shown in FIG. 7;
FIG. 9 is a cross-sectional view of a locking mechanism (with the locking piece in the unlocked state) according to some embodiments of this application;
FIG. 10 is a cross-sectional view of a moving member of a fastening assembly of a locking mechanism according to some embodiments of this application;
FIG. 11 is a schematic diagram of the connection between a locking mechanism and a lock base according to some embodiments of this application;
FIG. 12 is a cross-sectional view of a sleeve of a locking mechanism according to some embodiments of this application;
FIG. 13 is a schematic structural diagram of a second clutch member of a securing assembly of a locking mechanism according to some embodiments of this application; and
FIG. 14 is a schematic structural diagram of a first clutch member of a securing assembly of a locking mechanism according to some embodiments of this application.

Reference signs: 1000: vehicle; 100: battery assembly; 10: locking mechanism; 11: sleeve; 111: snap-fit surface; 112: third limiting portion; 1121: first groove segment; 1122: second groove segment; 1123: third groove segment; 12: locking piece; 121: connecting portion; 1211: fourth limiting portion; 122: snap-fit portion; 123: mounting portion; 1231: mounting hole; 1232: accommodating cavity; 1233: first limiting portion; 13: adjustment piece; 131: abutment surface; 132: actuating portion; 1321: protruding portion; 133: mounting channel; 134: connecting segment; 135: guide segment; 1351: first circumferential limiting portion; 14: fastening assembly; 141: snap-fit member; 142: moving member; 1421: second limiting portion; 1422: guide slope; 143: first elastic member; 15: securing assembly; 151: first clutch member; 1511: first toothed portion; 1512: first inclined surface; 152: second clutch member; 1521: second circumferential limiting portion; 1522: second toothed portion; 1523: second inclined surface; 153: second elastic member; 154: stop block; 20: battery; 21: box; 211: first box body; 212: second box body; 22: battery cell; 200: mounting frame; 300: lock base; 310: lock hole; 320: snap-fit groove; 400: controller; 500: motor; and X: first direction.

### DESCRIPTION OF EMBODIMENTS

To make the objectives, technical solutions, and advantages of the embodiments of this application clearer, the following clearly and completely describes the technical solutions in the embodiments of this application with reference to the accompanying drawings in the embodiments of this application. Apparently, the embodiments described are some but not all of the embodiments of this application. All other technical solutions obtained by a person of ordinary skill in the art based on the embodiments of this application without creative efforts shall fall within the protection scope of this application.

Unless otherwise defined, all technical and scientific terms used in this application shall have the same meanings as commonly understood by those skilled in the art to which this application belongs. The terms used in the specification of this application are intended to merely describe the specific embodiments rather than to limit this application. The terms "include", "comprise", and any variations thereof in the specification and claims of this application as well as the foregoing description of the drawings are intended to cover non-exclusive inclusions. In the specification, claims, or accompanying drawings of this application, the terms "first", "second", and the like are intended to distinguish between different objects rather than to indicate a particular order or a relative importance.

In this specification, reference to an "embodiment" means that specific features, structures or characteristics described with reference to the embodiment may be incorporated in at least one embodiment of this application. The word "embodiment" appearing in various places in the specification does not necessarily refer to the same embodiment, or an independent or alternative embodiment that is exclusive of other embodiments.

In the description of this application, it should also be noted that, unless otherwise expressly specified and limited, the terms "mount", "connect", and "join" should be understood in a broad sense, for example, it may be a fixed connection, a detachable connection, or an integral connection; it may be a direct connection or an indirect connection through an intermediate medium. For those of ordinary skill in the art, the specific meanings of the foregoing terms in this application can be understood according to specific circumstances.

The term "and/or" in this application is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between contextually associated objects.

In the embodiments of this application, the same reference signs denote the same components. For brevity, in different embodiments, detailed descriptions of the same components are omitted. It should be understood that the thickness, length, width and other dimensions of various components in the embodiments of the application shown in the drawings, as well as the overall thickness, length and width of the integrated apparatus, are for illustrative purposes only, and should not constitute any limitation to this application.

In this application, "a plurality of" means two (inclusive) or more.

In the embodiments of this application, a battery cell may be a secondary battery. The secondary battery is a battery cell that can be reused, after being discharged, by activating the active material inside it through charging.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, or the like, which is not limited in the embodiments of this application.

A battery cell generally includes an electrode assembly. The electrode assembly includes a positive electrode, a negative electrode, and a separator. During charging and discharging of a battery cell, active ions (for example, lithium ions) are intercalated and deintercalated between the positive electrode plate and the negative electrode plate. The separator is provided between the positive electrode and the negative electrode to prevent short circuits between the positive and negative electrodes while allowing active ions to pass through.

In some embodiments, the positive electrode may be a positive electrode plate, and the negative electrode may be a negative electrode plate.

In some embodiments, the electrode assembly further includes a separator, and the separator is provided between the positive electrode and the negative electrode.

In some embodiments, the separator is a separator film.

In some embodiments, the battery cell may include a housing. The housing is configured to package the electrode assembly, electrolyte, and other components. The housing may be a steel housing, an aluminum housing, a plastic housing (for example, polypropylene), a composite metal housing (for example, copper-aluminum composite housing), an aluminum-plastic film, or the like.

For example, the battery cell may be a cylindrical battery cell, a prismatic battery cell, a pouch battery cell, or a battery cell of another shape. The prismatic battery cell includes but is not limited to a square shell battery cell, a blade battery cell, or a polygonal battery such as a hexagonal battery.

The battery mentioned in the embodiments of this application is a single physical module that includes one or more battery cells for providing a higher voltage and capacity.

In some embodiments, the battery may be a battery module. When there are a plurality of battery cells, the plurality of battery cells are arranged and fixed to form a battery module.

In some embodiments, the battery may be a battery pack, where the battery pack includes a box and battery cells, and the battery cells or the battery module is accommodated in the box.

With technological advancements, new energy vehicles have developed rapidly, and the market share and usage frequency of electric vehicles have been increasing. Electric commercial vehicles, such as electric heavy trucks and electric light trucks, have gradually appeared in various application scenarios, and battery swapping stations have been established to facilitate battery assembly replacement for electric trucks.

In the field of new energy vehicles, due to the heavy load and long driving range of electric trucks, their energy consumption is greater than that of ordinary passenger vehicles. Therefore, to ensure endurance, electric trucks require frequent battery swapping operations. During the battery swapping process, the fixing and removal of the battery on the vehicle are critical concerns. To fix the battery, the current primary method involves providing a lock base on the vehicle and a locking mechanism on the battery. The adjustment piece of the locking mechanism can drive the locking piece of the locking mechanism to snap into or snap out of the lock base for swapping batteries of vehicles. However, the locking piece and the adjustment piece of the locking mechanism typically adopt a threaded connection structure, enabling the adjustment piece to drive the locking piece to move or rotate. The locking mechanism of this structure is prone to thread stripping between the locking piece and the adjustment piece after multiple battery swaps, and the weight of the battery mounted on the vehicle directly acts on the threaded structure between the locking piece and the adjustment piece, making it highly susceptible to failure of the threaded connection. This results in a shorter service life and lower reliability of the locking mechanism between the battery and the vehicle, leading to inconvenience in battery swapping and potential safety hazards in usage for electric devices.

In view of this, to address technical issues such as short service life and low reliability of the locking mechanism between the battery and the vehicle, an embodiment of this application provides a locking mechanism. The locking mechanism includes a sleeve, a locking piece, an adjustment piece, and a fastening assembly. The locking piece is movably provided in the sleeve, the locking piece has a locked state and an unlocked state, the locking piece is configured to: snap into the lock base in the locked state to engage the locking mechanism with the lock base along a first direction; and snap out of the lock base in the unlocked state to disengage the locking mechanism from the lock base along the first direction. The adjustment piece is connected within the sleeve rotatably about an axis extending along the first direction, where the adjustment piece is threadedly connected to the locking piece, and the adjustment piece is configured to drive, when rotating relative to the sleeve, the locking piece to move relative to the sleeve, so that the locking piece switches between the locked state and the unlocked state. The fastening assembly is configured to prevent the locking piece from moving relative to the adjustment piece in a direction from the adjustment piece toward the lock base along the first direction when the locking piece is in the locked state.

Regarding the locking mechanism of this structure, the locking mechanism is provided with the locking piece and the adjustment piece. With the locking piece threadedly connected to the adjustment piece, rotation of the adjustment piece can drive the locking piece to move relative to the sleeve, so that the locking piece switches between the locked state and the unlocked state This allows the locking piece to snap into or out of the lock base, thereby enabling the locking mechanism to engage with or disengage from the lock base along the first direction. Provided on the locking mechanism, the fastening assembly can prevent the locking piece from moving relative to the adjustment piece in the direction from the adjustment piece toward the lock base along the first direction when the locking piece is in the locked state. In other words, when the locking piece snaps into the lock base and the locking mechanism engages with the lock base along the first direction, the locking piece and the adjustment piece can be further locked under the action of the fastening assembly, preventing the locking piece from moving toward the lock base away from the adjustment piece, thereby further preventing the locking piece from disengaging from the adjustment piece along the first direction. The locking mechanism of this structure reduces the risk that the locking piece disengages from the adjustment piece when the locking piece snaps into the lock base, enhancing the stability and reliability of mutual locking between the locking mechanism and the lock base. In addition, the fastening assembly can transfer the force on the threaded structure between the locking piece and the adjustment piece to the fastening assembly, thereby relieving the problem of thread stripping or damage to the threaded structure between the locking piece and the adjustment piece. This reduces the risk of threaded connection failure between the locking piece and the adjustment piece, thereby helping improve the service life and reliability of the locking mechanism.

The locking mechanism disclosed in this embodiment of this application can be used in, but is not limited to, electric devices such as vehicles, ships, or aircraft. A power system for such electric devices can be formed using the locking mechanism, battery assembly, and the like disclosed in this application, which helps mitigate issues such as short service life and low reliability of the locking mechanism, thereby enhancing the safety in use of the electric devices.

An embodiment of this application provides an electric device using a battery assembly as a power source, where the electric device may include, but is not limited to, a mobile phone, a tablet, a laptop computer, an electric toy, an electric tool, an electric bicycle, an electric vehicle, a ship, a spacecraft, and the like. The electric toy may be a fixed or mobile electric toy, for example, a game console, an electric toy car, an electric toy ship, and an electric toy airplane. The spacecraft may be an airplane, a rocket, a space shuttle, a spaceship, or the like.

For ease of description, an example in which the electric device is a vehicle according to an embodiment of this application is used for description in the following embodiments.

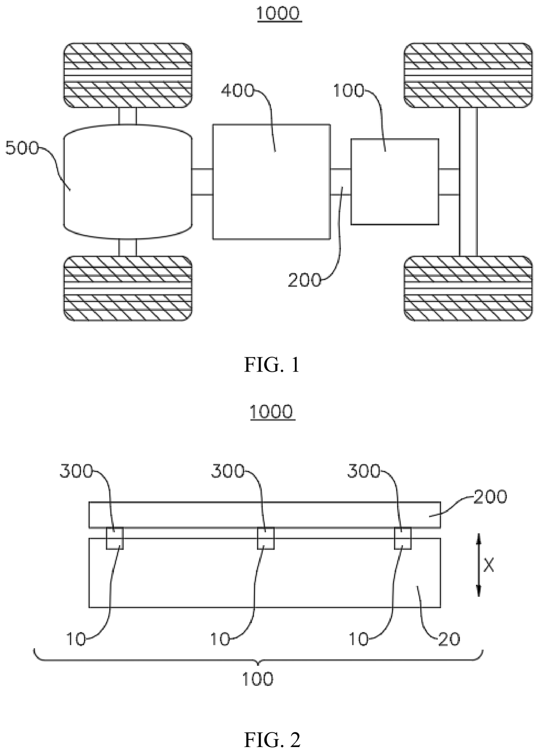

Referring to FIG. 1, FIG. 1 is a schematic structural diagram of a vehicle 1000 according to some embodiments of this application. The vehicle 1000 may be a fuel vehicle, a gas vehicle, or a new energy vehicle, and the new energy vehicle may be a battery electric vehicle, a hybrid electric vehicle, an extended range electric vehicle, or the like. A battery assembly 100 is provided in the vehicle 1000, and the battery assembly 100 may be provided at the bottom, front, or rear of the vehicle 1000.

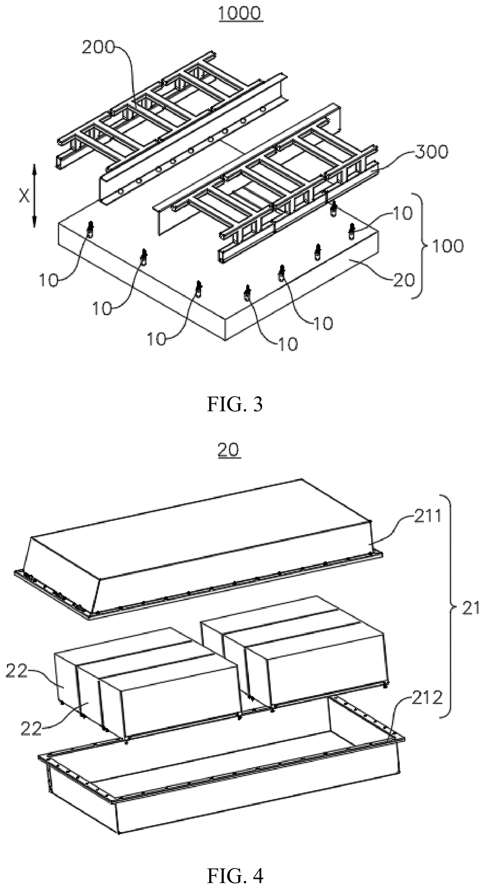

According to some embodiments of this application, referring to FIG. 2 and FIG. 3, FIG. 2 is a schematic diagram of a partial structure of the vehicle 1000 according to some embodiments of this application, and FIG. 3 is an exploded view of a partial structure of the vehicle 1000 according to some embodiments of this application. The vehicle 1000 has a mounting frame 200 and a lock base 300, where the lock base 300 is mounted on the mounting frame 200. The battery assembly 100 includes a locking mechanism 10 and a battery 20, where the locking mechanism 10 is mounted on the battery 20, and the locking mechanism 10 is configured to engage with or disengage from the lock base 300 for battery swapping of the vehicle 1000. The battery 20 may be used to supply power to the vehicle 1000, for example, as an operational power source or usage power source for the vehicle 1000.

Optionally, as shown in FIG. 1, the vehicle 1000 may further include a controller 400 and a motor 500, where the controller 400 is configured to control the battery 20 to supply power to the motor 500, for example, to satisfy power needs of start, navigation, and driving of the vehicle 1000.

In some embodiments of this application, the battery 20 may not only serve as an operational power source or usage power source for the vehicle 1000 but also as a driving power source for the vehicle 1000, replacing all or part of the fossil fuel or natural gas to provide driving power for the vehicle 1000.

Referring to FIG. 3 and further referring to FIG. 4, FIG. 4 is an exploded view of a structure of the battery 20 according to some embodiments of this application. The battery 20 may include a box 21 and a battery cell 22, where the battery cell 22 is configured to be accommodated in the box 21, and the locking mechanism 10 is mounted on the box 21.

The box 21 is configured to provide an accommodating space for the battery cell 22, and the box 21 may adopt various structures. In some embodiments, the box 21 may include a first box body 211 and a second box body 212, where the first box body 211 and the second box body 212 cover each other, and the first box body 211 and the second box body 212 together define an accommodating space for the battery cell 22. The first box body 211 and the second box body 212 may each be a hollow structure with one side open. The open side of the first box body 211 covers the open side of the second box body 212, so that the first box body 211 and the second box body 212 together define the accommodating space. For example, the locking mechanism 10 may be mounted on the first box body 211 or the second box body 212.

In other embodiments, the box 21 may be in another structure. For example, the second box body 212 may be a hollow structure with one end open, the first box body 211 may be a platelike structure, and the first box body 211 covers the open side of the second box body 212, so that the first box body 211 and the second box body 212 together define the accommodating space. Certainly, the box 21 formed by the first box body 211 and the second box body 212 may be in various shapes such as a cylinder and a cuboid. For example, as shown in FIG. 4, the box 21 is in the shape of a cuboid.

In the battery 20, the box 21 may accommodate one or more battery cells 22. When a plurality of battery cells 22 are provided in the box 21, the plurality of battery cells 22 may be connected in series, parallel, or series-parallel, where a series-parallel connection refers to a combination of series and parallel connections among the plurality of battery cells 22. The plurality of battery cells 22 may be directly connected in series, parallel, or series-parallel, and an entirety of the plurality of battery cells 22 is accommodated in the box 21. Alternatively, the battery 100 may be obtained by accommodating in the box 21 a plurality of battery modules connected in series, parallel, or series-parallel, where each of the battery modules is formed by connecting a plurality of battery cells 22 in series, parallel, or series-parallel. In some embodiments, the battery 20 may further include other structures. For example, the battery 20 may include a busbar component, where the busbar component is configured to connect a plurality of battery cells 22 to achieve electrical connection between the plurality of battery cells 22.

Each battery cell 22 may be a secondary battery or a primary battery, or may alternatively be a lithium-sulfur battery, a sodium-ion battery, or a magnesium-ion battery, which is not limited thereto. The battery cell 22 may be cylindrical, flat, cuboid, or other shapes. For example, as shown in FIG. 4, the battery cell 22 has a cuboid structure.

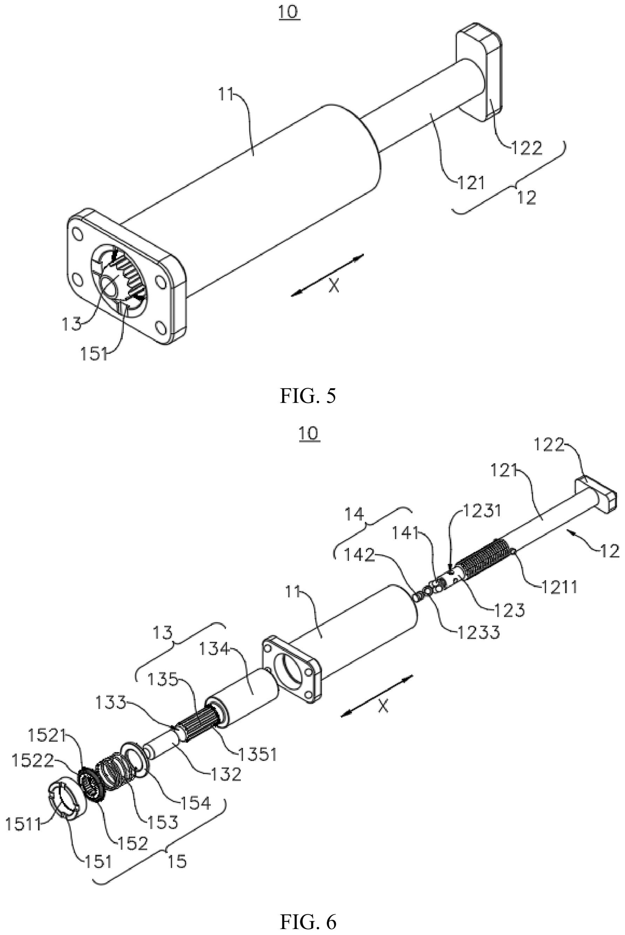

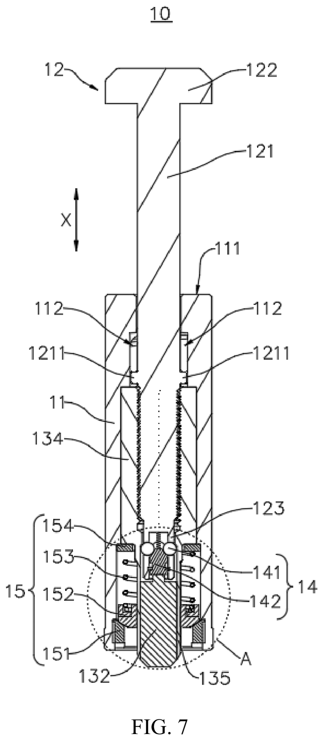

According to some embodiments of this application, referring to FIG. 3 and further referring to FIG. 5, FIG. 6, and FIG. 7, FIG. 5 is a schematic structural diagram of a locking mechanism 10 according to some embodiments of this application, FIG. 6 is an exploded view of a structure of the locking mechanism 10 according to some embodiments of this application, and FIG. 7 is a cross-sectional view of the locking mechanism 10 (with a locking piece 12 in the locked state) according to some embodiments of this application. This application provides a locking mechanism 10 configured to engage with or disengage from a lock base 300 along a first direction X, where the locking mechanism 10 includes a sleeve 11, a locking piece 12, an adjustment piece 13, and a fastening assembly 14. The locking piece 12 is movably provided in the sleeve 11, the locking piece 12 has a locked state and an unlocked state, the locking piece 12 is configured to snap into the lock base 300 in the locked state to enable the locking mechanism 10 to engage with the lock base 300 along the first direction X, and the locking piece 12 is configured to snap out of the lock base 300 in the unlocked state to allow the locking mechanism 10 to disengage from the lock base 300 along the first direction X. The adjustment piece 13 is connected within the sleeve 11 rotatably about an axis extending along the first direction X, where the adjustment piece 13 is threadedly connected to the locking piece 12, and the adjustment piece 13 is configured to drive, when rotating relative to the sleeve 11, the locking piece 12 to move relative to the sleeve 11, so that the locking piece 12 switches between the locked state and the unlocked state. The fastening assembly 14 is configured to prevent the locking piece 12 from moving relative to the adjustment piece 13 in a direction from the adjustment piece 13 toward the lock base 300 along the first direction X when the locking piece 12 is in the locked state.

The locking piece 12 is configured to snap into or out of the lock base 300, so that the locking mechanism 10 engages with or disengages from the lock base 300 along the first direction X through the locking piece 12, achieving locking or unlocking between the locking mechanism 10 and the lock base 300.

The locking piece 12 is movable relative to the sleeve 11, so that the locking piece 12 has the locked state in which it snaps into the lock base 300 and an unlocked state in which it snaps out of the lock base 300. The locking piece 12 may have various structures. For example, as shown in FIG. 6 and FIG. 7, the locking piece 12 includes a connecting portion 121 and a snap-fit portion 122, where the connecting portion 121 extends along the first direction X and is inserted into the sleeve 11, the connecting portion 121 is threadedly connected to the adjustment piece 13, the snap-fit portion 122 is located outside the sleeve 11 and connected to an end of the connecting portion 121 away from the sleeve 11, the snap-fit portion 122 protrudes along its extending direction from an outer peripheral surface of the connecting portion 121, and the snap-fit portion 122 is configured to engage with the lock base 300. The extending direction of the snap-fit portion 122 is perpendicular to the first direction X, so that the locking piece 12 is an irregular structure capable of rotating about an axis extending along the first direction X. In this way, rotation of the connecting portion 121 can drive the snap-fit portion 122 to rotate, allowing the snap-fit portion 122 to engage with or disengage from the lock base 300. Certainly, in other embodiments, the locking piece 12 may alternatively be a structure telescopically movable in a direction perpendicular to the first direction X, enabling the locking piece 12 to snap into or out of the lock base 300.

The adjustment piece 13 is threadedly connected to the locking piece 12, meaning the locking piece 12 is threadedly connected to the adjustment piece 13. The case may be that: the locking piece 12 is inserted into the adjustment piece 13, the locking piece 12 has external threads, the adjustment piece 13 has internal threads, and the locking piece 12 is threadedly connected to the adjustment piece 13. The case may alternatively be that: the adjustment piece 13 is inserted into the locking piece 12, the locking piece 12 has internal threads, the adjustment piece 13 has external threads, and the locking piece 12 is threadedly connected to the adjustment piece 13. For example, as shown in FIG. 7, the connecting portion 121 of the locking piece 12 is inserted into the adjustment piece 13, the connecting portion 121 has external threads, and the adjustment piece 13 has internal threads, achieving threaded connection between the adjustment piece 13 and the locking piece 12.

The adjustment piece 13 is configured to drive, when rotating relative to the sleeve 11, the locking piece 12 to move relative to the sleeve 11, so that the locking piece 12 switches between the locked state and the unlocked state. In other words, through rotating the adjustment piece 13 relative to the sleeve 11, the adjustment piece 13 can drive the locking piece 12 to move relative to the sleeve 11, achieving switching of the locking piece 12 between the locked state and the unlocked state. For example, as shown in FIG. 7, rotating the adjustment piece 13 can drive the connecting portion 121 of the locking piece 12 to rotate relative to the sleeve 11, so that the connecting portion 121 drives the snap-fit portion 122 to rotate. In this way. the snap-fit portion 122, whose extending direction is perpendicular to the first direction X, rotates in a plane perpendicular to the first direction X, allowing the snap-fit portion 122 to engage with or disengage from the lock base 300, thereby achieving switching of the locking piece 12 between the locked state and the unlocked state.

The fastening assembly 14 is configured to prevent the locking piece 12 from moving relative to the adjustment piece 13 in the direction from the adjustment piece 13 toward the lock base 300 along the first direction X when the locking piece 12 is in the locked state. This means that when the locking piece 12 snaps into the lock base 300, the fastening assembly 14 can prevent the locking piece 12 from moving in a direction from the sleeve 11 toward the snap-fit portion 122 along the first direction X.

The locking mechanism 10 is provided with the locking piece 12 and the adjustment piece 13. By threadedly connecting the locking piece 12 to the adjustment piece 13, rotation of the adjustment piece 13 can drive the locking piece 12 to move relative to the sleeve 11, so that the locking piece 12 switches between the locked state and the unlocked state. This allows the locking piece 12 to snap into or out of the lock base 300, thereby enabling the locking mechanism 10 to engage with or disengage from the lock base 300 along the first direction X. Provided on the locking mechanism 10, the fastening assembly 14 can prevent the locking piece 12 from moving relative to the adjustment piece 13 in the direction from the adjustment piece 13 toward the lock base 300 along the first direction X when the locking piece 12 is in the locked state. In other words, when the locking piece 12 snaps into the lock base 300 and the locking mechanism 10 engages with the lock base 300 along the first direction X, the locking piece 12 and the adjustment piece 13 can be further locked under the action of the fastening assembly 14, preventing the locking piece 12 from moving toward the lock base 300 away from the adjustment piece 13, thereby further preventing the locking piece 12 from disengaging from the adjustment piece 13 along the first direction X. The locking mechanism 10 of this structure reduces the risk that the locking piece 12 disengages from the adjustment piece 13 when the locking piece 12 snaps into the lock base 300, enhancing the stability and reliability of mutual locking between the locking mechanism 10 and the lock base 300. In addition, the fastening assembly 14 can transfer the force on the threaded structure between the locking piece 12 and the adjustment piece 13 to the fastening assembly 14, thereby relieving the problem of thread stripping or damage to the threaded structure between the locking piece 12 and the adjustment piece 13. This reduces the risk of threaded connection failure between the locking piece 12 and the adjustment piece 13, thereby helping improve the service life and reliability of the locking mechanism 10.

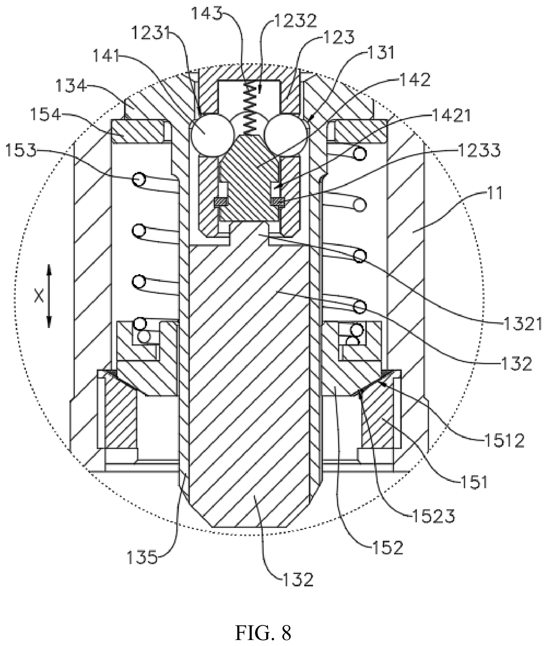

According to some embodiments of this application, referring to FIG. 6 and FIG. 7 and further referring to FIG. 8, FIG. 8 is an enlarged view of position A of the locking mechanism 10 shown in FIG. 7. The fastening assembly 14 is provided on the locking piece 12, the adjustment piece 13 has an abutment surface 131, and the fastening assembly 14 is configured to abut against the abutment surface 131 in the direction from the adjustment piece 13 toward the lock base 300 along the first direction X when the locking piece 12 is in the locked state.

The locking piece 12 has a mounting portion 123 inserted into the adjustment piece 13, the mounting portion 123 is connected to an end of the connecting portion 121 away from the snap-fit portion 122 along the first direction X, and the fastening assembly 14 is provided on the mounting portion 123 of the locking piece 12. Certainly, in other embodiments, the fastening assembly 14 may alternatively be provided on the adjustment piece 13, and the locking piece 12 is provided with a corresponding abutment portion for the fastening assembly 14 to abut against.

The adjustment piece 13 has an abutment surface 131 formed on an inner surface of the adjustment piece 13, meaning the inner surface of the adjustment piece 13 includes the abutment surface 131. For example, as shown in FIG. 8, the abutment surface 131 is an arcuate surface formed on the inner surface of the adjustment piece 13. Certainly, in other embodiments, the abutment surface 131 may alternatively be an inclined plane provided on the adjustment piece 13.

It should be noted that, in other embodiments, the locking mechanism 10 may have other structures. For example, a portion of the adjustment piece 13 may be inserted into the locking piece 12, with the abutment surface 131 formed on an outer surface of the adjustment piece 13.

The fastening assembly 14 is provided on the locking piece 12, and the adjustment piece 13 has an abutment surface 131 that abuts against the fastening assembly 14. In this case, when the locking piece 12 is in the locked state, the fastening assembly 14 can abut against the abutment surface 131 in the direction from the adjustment piece 13 toward the lock base 300 along the first direction X, thereby preventing the locking piece 12 from moving relative to the adjustment piece 13 in the direction from the adjustment piece 13 toward the lock base 300 along the first direction X. This transfers the force on the threaded structure between the locking piece 12 and the adjustment piece 13 to the interface between the fastening assembly 14 and the abutment surface 131 of the adjustment piece 13, mitigating thread stripping or damage to the threaded structure between the locking piece 12 and the adjustment piece 13.

According to some embodiments of this application, referring to FIG. 6, FIG. 7, and FIG. 8, the locking piece 12 has a mounting portion 123 inserted into the adjustment piece 13 along the first direction X, and an inner surface of the adjustment piece 13 includes the abutment surface 131. The fastening assembly 14 includes a snap-fit member 141 movably provided on the mounting portion 123, where the snap-fit member 141 is configured to abut against the abutment surface 131 after protruding from an outer peripheral surface of the mounting portion 123 or to leave the abutment surface 131 after retracting into the mounting portion 123.

The inner surface of the adjustment piece 13 includes the abutment surface 131, meaning that the abutment surface 131 is formed on the inner surface of the adjustment piece 13.

The snap-fit member 141 is configured to prevent the locking piece 12 from moving relative to the adjustment piece 13 in the direction from the adjustment piece 13 toward the lock base 300 along the first direction X after abutting against the abutment surface 131. The snap-fit member 141 is movably provided on the mounting portion 123, and the snap-fit member 141 is configured to: abut against the abutment surface 131 when protruding from the outer peripheral surface of the mounting portion 123; or leave the abutment surface 131 after retracting into the mounting portion 123. Specifically, the snap-fit member 141 abuts against the abutment surface 131 of the adjustment piece 13 when moving relative to the mounting portion 123 and protruding from the outer peripheral surface of the mounting portion 123, so as to prevent the locking piece 12 from moving relative to the adjustment piece 13. Conversely, the snap-fit member 141 leaves the abutment surface 131 of the adjustment piece 13 when moving relative to the mounting portion 123 and retracting into the mounting portion 123, so as to allow the locking piece 12 to move relative to the adjustment piece 13.

For example, as shown in FIG. 8, a mounting hole 1231 is provided on the outer peripheral surface of the mounting portion 123, and the snap-fit member 141 is provided within the mounting hole 1231 movably along a radial direction of the mounting portion 123, so that the snap-fit member 141 protrudes from or retracts into the outer peripheral surface of the mounting portion 123 when moving relative to the mounting portion 123 along the radial direction.

It should be noted that, in other embodiments, the fastening assembly 14 may have various structures. For example, the fastening assembly 14 may be a locking pin inserted between the locking piece 12 and the adjustment piece 13. When the locking piece 12 is in the locked state, the locking pin is inserted between the locking piece 12 and the adjustment piece 13 along the radial direction of the locking piece 12 to prevent the locking piece 12 from moving relative to the adjustment piece 13 in the direction from the adjustment piece 13 toward the lock base 300 along the first direction X.

The locking piece 12 has a mounting portion 123 inserted into the adjustment piece 13, with the abutment surface 131 located on the inner surface of the adjustment piece 13, so that the snap-fit member 141 of the fastening assembly 14 can abut against the abutment surface 131 after protruding from the outer peripheral surface of the mounting portion 123. In this way, the fastening assembly 14 can prevent the locking piece 12 from moving relative to the adjustment piece 13 in the direction from the adjustment piece 13 toward the lock base 300 along the first direction X. Conversely, when retracting into the mounting portion 123, the snap-fit member 141 of the fastening assembly 14 leaves the abutment surface 131, allowing the locking piece 12 to move relative to the adjustment piece 13. The structure is simple and easy to implement.

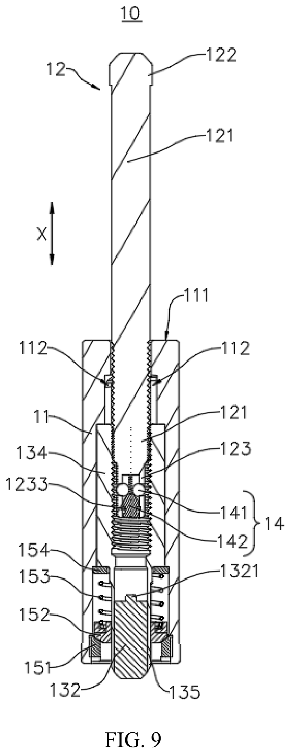

According to some embodiments of this application, referring to FIG. 6, FIG. 7, and FIG. 8, and further referring to FIG. 9, FIG. 9 is a cross-sectional view of the locking mechanism 10 (with the locking piece 12 in the unlocked state) according to some embodiments of this application. The fastening assembly 14 may further include a moving member 142 provided within the mounting portion 123 movably along the first direction X, the moving member 142 is configured to: when moving relative to the mounting portion 123 along the first direction X, push the snap-fit member 141 to protrude from the outer peripheral surface of the mounting portion 123 or allow the snap-fit member 141 to retract into the mounting portion 123, thereby enabling the snap-fit member 141 to abut against or leave the abutment surface 131.

The moving member 142 is configured to: push the snap-fit member 141 to protrude from the outer peripheral surface of the mounting portion 123 or allow the snap-fit member 141 to retract into the mounting portion 123. It should be noted that: as shown in FIG. 8, when the moving member 142 moves along the first direction X toward the connecting portion 121 of the locking piece 12, the moving member 142 can push the snap-fit member 141 to move along the radial direction of the mounting portion 123 and protrude from the outer peripheral surface of the mounting portion 123, so that the snap-fit member 141 abuts against the abutment surface 131 and the snap-fit member 141 is fixed in the position abutting against the abutment surface 131. When the moving member 142 moves along the first direction X away from the connecting portion 121 of the locking piece 12, the moving member 142 can release the constraint on the snap-fit member 141, allowing the snap-fit member 141 to retract into the mounting portion 123 under the reaction force of the abutment surface 131, so that the snap-fit member 141 leaves the abutment surface 131.

The fastening assembly 14 further includes the moving member 142 configured to push the snap-fit member 141 to protrude from the outer peripheral surface of the mounting portion 123 and to allow the snap-fit member 141 to retract into the mounting portion 123. Provided within the mounting portion 123 movably along the first direction X, the moving member 142 can push the snap-fit member 141 to protrude from the outer peripheral surface of the mounting portion 123 when moving relative to the mounting portion 123 in one direction along the first direction X, so as to prevent the snap-fit member 141 from retracting. When the moving member 142 moves relative to the mounting portion 123 in the opposite direction along the first direction X, it can release the abutment with the snap-fit member 141, allowing the snap-fit member 141 to retract into the mounting portion 123, thereby enabling the snap-fit member 141 to abut against or leave the abutment surface 131.

According to some embodiments of this application, referring to FIG. 6, FIG. 7, FIG. 8, and FIG. 9, the adjustment piece 13 is configured to drive, when rotating relative to the sleeve 11, the locking piece 12 to move between a first position and a second position along the first direction X, and the locking piece 12 is in the locked state when located at the first position (as shown in FIG. 7) and in the unlocked state when located at the second position (as shown in FIG. 9). The adjustment piece 13 is provided with an actuating portion 132 configured to: when the locking piece 12 moves from the second position to the first position, abut against and push the moving member 142 to move so that the moving member 142 pushes the snap-fit member 141 to protrude from the outer peripheral surface of the mounting portion 123; and when the locking piece 12 moves from the first position to the second position, leave the moving member 142 so that the moving member 142 allows the snap-fit member 141 to retract into the mounting portion 123.

The adjustment piece 13 is provided with the actuating portion 132 configured to push the moving member 142 to move along the first direction X toward the connecting portion 121 when the adjustment piece 13 drives, when rotating relative to the sleeve 11, the locking piece 12 to move from the second position to the first position (from the structure shown in FIG. 9 to the structure shown in FIG. 7), so that the moving member 142 pushes the snap-fit member 141 to protrude from the outer peripheral surface of the mounting portion 123, allowing the snap-fit member 141 to abut against the abutment surface 131. The actuating portion 132 is further configured to allow the moving member 142 to move along the first direction X away from the connecting portion 121 when the adjustment piece 13 drives, when rotating relative to the sleeve 11, the locking piece 12 to move from the first position to the second position (from the structure shown in FIG. 7 to the structure shown in FIG. 9). This releases the constraint on the snap-fit member 141 and allows the snap-fit member 141 to retract into the mounting portion 123, enabling the snap-fit member 141 to leave the abutment surface 131.

For example, referring to FIG. 6 and FIG. 8, an end of the adjustment piece 13 away from the snap-fit portion 122 of the locking piece 12 is provided with a mounting channel 133, and the actuating portion 132 is accommodated in the mounting channel 133 and fixedly connected to the adjustment piece 13. Correspondingly, an accommodating cavity 1232 is provided inside the mounting portion 123, and the accommodating cavity 1232 penetrates one end of the mounting portion 123 away from the snap-fit portion 122 along the first direction X, so that the accommodating cavity 1232 communicates with the mounting channel 133, and the accommodating cavity 1232 communicates with a mounting hole 1231 provided on the outer peripheral surface of the mounting portion 123. The moving member 142 is provided within the accommodating cavity 1232 movably along the first direction X, and the actuating portion 132 and the locking piece 12 are arranged along the first direction X. In this way, when the locking piece 12 moves from the second position to the first position, that is, when the locking piece 12 moves toward the actuating portion 132 along the first direction X, a portion of the actuating portion 132 can be inserted into the accommodating cavity 1232 and abut against the moving member 142 (as shown in FIG. 7) to push the moving member 142 to move along the first direction X toward the connecting portion 121. Conversely, when the locking piece 12 moves from the first position to the second position, that is, when the locking piece 12 moves away from the actuating portion 132 along the first direction X, the actuating portion 132 can exit the accommodating cavity 1232 and separate from the moving member 142 (as shown in FIG. 9), allowing the moving member 142 to move along the first direction X away from the connecting portion 121, thereby enabling the actuating portion 132 to cause the snap-fit member 141 to abut against or leave the abutment surface 131.

Optionally, the actuating portion 132 and the adjustment piece 13 may be connected in various manners. For example, the actuating portion 132 may be threadedly connected within the adjustment piece 13, welded to the adjustment piece 13, or connected to the inner wall of the mounting channel 133 via interference fit.

The adjustment piece 13, while driving the locking piece 12 to switch between the locked state and the unlocked state, can also drive the locking piece 12 to move relative to the sleeve 11 along the first direction X, so that the locking piece 12 to have the first position and the second position along the first direction X. Provided on the adjustment piece 13, the actuating portion 132 can abut against and push the moving member 142 to move when the locking piece 12 moves from the second position to the first position, so that the snap-fit member 141 protrudes from the outer peripheral surface of the mounting portion 123 under the push of the moving member 142. The actuating portion 132 can also separate from the moving member 142 when the locking piece 12 moves from the first position to the second position, releasing the constraint on the moving member 142, so that the moving member 142 allows the snap-fit member 141 to retract into the mounting portion 123. This enables the snap-fit member 141 of the fastening assembly 14 to protrude from or retract into the outer peripheral surface of the mounting portion 123 in coordination with the moving member 142 and the actuating portion 132 while the locking piece 12 moves along the first direction X to switch between the locked and unlocked states. This achieves linkage of the locking mechanism 10 without requiring additional driving mechanisms or manual intervention, thereby achieving ease of operation of the locking mechanism 10.

According to some embodiments of this application, referring to FIG. 8 and FIG. 9, the actuating portion 132 and the mounting portion 123 are arranged along the first direction X, an end of the actuating portion 132 facing the mounting portion 123 is provided with a protruding portion 1321, and the protruding portion 1321 is configured to be inserted into the mounting portion 123 to abut against the moving member 142.

Along the first direction X, the protruding portion 1321 protrudes from the end of the actuating portion 132 facing the locking piece 12, and the protruding portion 1321 can be inserted into the accommodating cavity 1232 to abut against the moving member 142, so that the actuating portion 132 pushes the moving member 142 to move.

Provided at the end of the actuating portion 132 facing the mounting portion 123 along the first direction X, the protruding portion 1321 can be inserted into the mounting portion 123 to abut against the moving member 142 when the mounting portion 123 approaches the actuating portion 132 along the first direction X. This helps the actuating portion 132 in pushing the moving member 142 to move.

In some embodiments, referring to FIG. 8, an accommodating cavity 1232 is formed inside the mounting portion 123, the accommodating cavity 1232 penetrates an end of the mounting portion 123 close to the actuating portion 132 along the first direction X, and the accommodating cavity 1232 is configured to accommodate the protruding portion 1321. where the moving member 142 is provided within the accommodating cavity 1232 movably along the first direction X, a mounting hole 1231 is provided on the outer peripheral surface of the mounting portion 123, the mounting hole 1231 communicates with the accommodating cavity 1232, and the snap-fit member 141 is movably provided within the mounting hole 1231.

The accommodating cavity 1232 is provided inside the mounting portion 123 to accommodate the moving member 142, and the accommodating cavity 1232 penetrates one end of the mounting portion 123 along the first direction X, so that the protruding portion 1321 of the actuating portion 132 can be inserted into the accommodating cavity 1232 and abut against the moving member 142, simplifying the structure of the locking mechanism 10. Additionally, the mounting hole 1231 communicating with the accommodating cavity 1232 is provided on the outer peripheral surface of the mounting portion 123, and the snap-fit member 141 is movably provided within the mounting hole 1231. In this way, the moving member 142 can push the snap-fit member 141 to protrude from the outer peripheral surface of the mounting portion 123 through the mounting hole 1231 or allow the third snap-fit portion 122 to retract into the mounting portion 123 through the mounting hole 1231, when moving along the first direction X within the accommodating cavity 1232. The structure is simple and easy to implement.

According to some embodiments of this application, referring to FIG. 8, the fastening assembly 14 further includes a first elastic member 143 provided between the moving member 142 and the mounting portion 123, the first elastic member 143 is configured to drive the moving member 142 to move along the first direction X toward the actuating portion 132, so that the moving member 142 allows the snap-fit member 141 to retract into the mounting portion 123.

The first elastic member 143 is configured to drive the moving member 142 to move along the first direction X toward the actuating portion 132, meaning that the first elastic member 143 can apply an elastic force to move the moving member 142 along the first direction X toward the actuating portion 132.

For example, as shown in FIG. 8, the first elastic member 143 is connected in a compressed state along the first direction X between the moving member 142 and the bottom surface of the accommodating cavity 1232. Certainly, in other embodiments, the first elastic member 143 may alternatively be connected in a stretched state along the first direction X between the moving member 142 and an end of the mounting portion 123 away from the connecting portion 121.

For example, as shown in FIG. 8, the first elastic member 143 is a spring. In other embodiments, the first elastic member 143 may alternatively be an elastic piece or elastic rubber provided between the moving member 142 and the mounting portion 123.

The first elastic member 143 is provided between the moving member 142 and the mounting portion 123, and the first elastic member 143 applies a force to the moving member 142 along the first direction X toward the actuating portion 132, so that the moving member 142 can automatically return to a position allowing the snap-fit member 141 to retract into the mounting portion 123 after retracting from the actuating portion 132. This relieves the problem that the snap-fit member 141 mistakenly abuts against the abutment surface 131 of the adjustment piece 13 due to reset failure of the moving member 142, and eliminates the need for manual intervention, facilitating ease of operation and use.

According to some embodiments of this application, referring to FIG. 6 and FIG. 8, a first limiting portion 1233 is provided inside the mounting portion 123, the moving member 142 is provided with a second limiting portion 1421, and the first limiting portion 1233 and the second limiting portion 1421 cooperate to restrict the range of movement of the moving member 142 relative to the mounting portion 123 along the first direction X.

The first limiting portion 1233 and the second limiting portion 1421 are provided on the mounting portion 123 and the moving member 142 respectively. The cooperation between the first limiting portion 1233 and the second limiting portion 1421 restricts the range of movement of the moving member 142 along the first direction X. The first limiting portion 1233 and the second limiting portion 1421 may have various structures. For example, the first limiting portion 1233 may be a limiting block provided on an inner surface of the mounting portion 123, the second limiting portion 1421 may be a groove provided on an outer peripheral surface of the moving member 142, and at least a portion of the limiting block is inserted into the groove. Alternatively, the first limiting portion 1233 may be a strip-shaped hole provided on the inner surface of the mounting portion 123, with the length direction of the strip-shaped hole being the first direction X, and correspondingly, the second limiting portion 1421 may be a pin protruding from the outer peripheral surface of the mounting portion 123, with at least a portion of the pin inserted into the strip-shaped hole.

The first limiting portion 1233 and the second limiting portion 1421 are provided on the mounting portion 123 and the moving member 142 respectively. The cooperation between the first limiting portion 1233 and the second limiting portion 1421 restricts the range of movement of the moving member 142 relative to the mounting portion 123 along the first direction X. This allows for precise switching of the moving member 142 along the first direction X between a position where the snap-fit member 141 is pushed to protrude from the outer peripheral surface of the mounting portion 123 and a position where the snap-fit member 141 is allowed to retract into the mounting portion 123, so that the snap-fit member 141 can abut against and leave the abutment surface 131 more precisely. In addition, the position of the moving member 142 can be limited to some extent, reducing the risk of the moving member 142 detaching from the mounting portion 123.

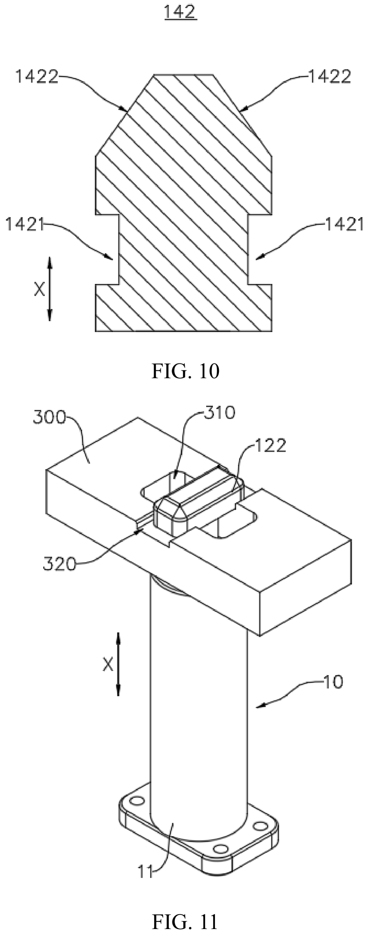

In some embodiments, referring to FIG. 8 and further referring to FIG. 10, FIG. 10 is a cross-sectional view of the moving member 142 of the fastening assembly 14 of the locking mechanism 10 according to some embodiments of this application. The first limiting portion 1233 is a limiting block provided on the inner peripheral surface of the mounting portion 123, and the second limiting portion 1421 is a groove provided on the outer peripheral surface of the moving member 142, with at least a portion of the limiting block being accommodated in the groove.

At least a portion of the limiting block is accommodated in the groove, meaning that the limiting block may be entirely or partially accommodated in the groove.

For example, the limiting block is latched into a mounting groove on the inner peripheral surface of the mounting portion 123. Certainly, in other embodiments, the limiting block may alternatively be connected to the inner peripheral surface of the mounting portion 123 by welding, adhesion, or interference fit.

In other embodiments, the groove may alternatively be provided on the inner peripheral surface of the mounting portion 123, and correspondingly, the limiting block may protrude from the outer peripheral surface of the moving member 142.

It should be noted that, in the embodiment where the first elastic member 143 is provided between the moving member 142 and the mounting portion 123, the first elastic member 143 may alternatively be provided between a side of the limiting block facing the connecting portion 121 along the first direction X and a groove sidewall.

The first limiting portion 1233 and the second limiting portion 1421 are respectively a limiting block provided on the inner peripheral surface of the mounting portion 123 and a groove provided on the outer peripheral surface of the moving member 142. Inserted into the groove, the limiting block can abut against two opposing sidewalls of the groove along the first direction X when the moving member 142 moves relative to the mounting portion 123, thereby restricting the range of movement of the moving member 142 along the first direction X through the cooperation of the limiting block and the groove. The structure is simple, easy to implement, and highly stable.

In some embodiments, referring to FIG. 6, FIG. 8, and FIG. 10, the first limiting portion 1233 is an annular limiting block extending along a circumferential direction of the moving member 142, and the second limiting portion 1421 is an annular groove extending along the circumferential direction of the moving member 142.

Both the first limiting portion 1233 and the second limiting portion 1421 are configured as annular structures, so that the first limiting portion 1233 and the second limiting portion 1421 cooperate in restricting the moving member 142 more stably and reliably.

According to some embodiments of this application, referring to FIG. 8 and FIG. 10, a guide slope 1422 is formed on the moving member 142, and the guide slope 1422 is configured to abut against the snap-fit member 141 to push the snap-fit member 141 to protrude from the outer peripheral surface of the mounting portion 123.

The guide slope 1422 is formed at an end of the moving member 142 close to the connecting portion 121 along the first direction X. For example, an end of the moving member 142 close to the connecting portion 121 along the first direction X is a conical structure, forming a conical surface at the end of the moving member 142 close to the connecting portion 121 along the first direction X. This conical surface is the guide slope 1422, so that when the moving member 142 moves along the first direction X toward the connecting portion 121, the snap-fit member 141 can be pushed by the guide slope 1422 to protrude from the outer peripheral surface of the mounting portion 123.

The guide slope 1422 is provided on the moving member 142 for abutting against the snap-fit member 141, so that the snap-fit member 141 can be guided by the guide slope 1422 to protrude from the outer peripheral surface of the mounting portion 123 when the moving member 142 moves along the first direction X. This helps the moving member 142 in driving the snap-fit member 141 to protrude from the outer peripheral surface of the mounting portion 123 or allowing the snap-fit member 141 to retract into the mounting portion 123. The locking mechanism 10 of this structure reduces jams between the moving member 142 and the snap-fit member 141.

According to some embodiments of this application, referring to FIG. 6 and FIG. 8, the fastening assembly 14 includes a plurality of snap-fit members 141, and the plurality of snap-fit members 141 are spaced apart along a circumferential direction of the mounting portion 123.

For example, the fastening assembly 14 is provided with four snap-fit members 141, and the four snap-fit members 141 are evenly spaced around the moving member 142. Certainly, in other embodiments, the quantity of snap-fit members 141 may alternatively be two, three, five, six, or the like.

The fastening assembly 14 is provided with a plurality of snap-fit members 141 spaced apart along the circumferential direction of the mounting portion 123, so that when the plurality of snap-fit members 141 protrude from the outer peripheral surface of the mounting portion 123, they form a structure surrounding the mounting portion 123. This further enhances the structural stability and reliability of the abutment between the fastening assembly 14 and the adjustment piece 13, helping the fastening assembly 14 better absorb part of the force applied on the threaded structure between the locking piece 12 and the adjustment piece 13.

In some embodiments, referring to FIG. 6 and FIG. 8, the snap-fit member 141 is spherical. Certainly, in other embodiments, the snap-fit member 141 may alternatively be a cubic structure, a cuboid structure, a conical structure, or the like.

The snap-fit member 141 is configured to be a spherical structure. This helps the moving member 142 in pushing the snap-fit member 141 to protrude from the outer peripheral surface of the mounting portion 123 or allowing the snap-fit member 141 to retract into the mounting portion 123, when moving relative to the mounting portion 123 along the first direction X, so as to reduce jams between the moving member 142 and the snap-fit member 141.

According to some embodiments of this application, referring to FIG. 5, FIG. 6, FIG. 7, and FIG. 8, the locking piece 12 includes a connecting portion 121 and a snap-fit portion 122. The connecting portion 121 extends along the first direction X and is inserted into the sleeve 11, and the connecting portion 121 is threadedly connected to the adjustment piece 13. The snap-fit portion 122 is located outside the sleeve 11 and connected to an end of the connecting portion 121 away from the sleeve 11, where the snap-fit portion 122 protrudes along its extending direction from an outer peripheral surface of the connecting portion 121, the snap-fit portion 122 is configured to engage with the lock base 300, and the extending direction of the snap-fit portion 122 is perpendicular to the first direction X. The adjustment piece 13 is capable of driving the connecting portion 121 to rotate through rotating relative to the sleeve 11, so that the snap-fit portion 122 engages with or disengages from the lock base 300 and the locking piece 12 switches between the locked state and the unlocked state.

The mounting portion 123 is connected to an end of the connecting portion 121 away from the snap-fit portion 122 along the first direction X, the connecting portion 121 of the locking piece 12 is a cylindrical structure extending along the first direction X, and a portion of the connecting portion 121 is inserted into the sleeve 11 along the first direction X. The portion of the connecting portion 121 inserted into the sleeve 11 is threadedly connected to the adjustment piece 13. For example, a portion of the adjustment piece 13 is sleeved outside the connecting portion 121, the adjustment piece 13 has internal threads, and correspondingly, the portion of the connecting portion 121 accommodated in the adjustment piece 13 has external threads, so that the connecting portion 121 is threadedly connected to the adjustment piece 13. This allows the adjustment piece 13 to drive the connecting portion 121 to rotate about an axis extending along the first direction X. Certainly, in other embodiments, a portion of the connecting portion 121 may be sleeved outside the adjustment piece 13, the connecting portion 121 having internal threads, and the portion of the adjustment piece 13 accommodated in the connecting portion 121 has external threads, allowing for the threaded connection between the connecting portion 121 and the adjustment piece 13.

The snap-fit portion 122 is located outside the sleeve 11 and connected to an end of the connecting portion 121 away from the sleeve 11, meaning that the connecting portion 121 has a portion not inserted into the sleeve 11, and the snap-fit portion 122 is connected to an end of the portion of the connecting portion 121 not inserted into the sleeve 11, so that the snap-fit portion 122 and the sleeve 11 are spaced apart along the first direction X.

The snap-fit portion 122 protruding along its extending direction from the outer peripheral surface of the connecting portion 121 means that in the extending direction of the snap-fit portion 122, the snap-fit portion 122 extends beyond the outer peripheral surface of the connecting portion 121. For example, as shown in FIG. 6 and FIG. 7, the extending direction of the snap-fit portion 122 is perpendicular to the first direction X, so that the snap-fit portion 122 and the connecting portion 121 form a "T"-shaped structure. Certainly, in other embodiments, the snap-fit portion 122 and the connecting portion 121 may alternatively form an "L"-shaped structure.

The adjustment piece 13 is capable of driving the connecting portion 121 to rotate through rotating relative to the sleeve 11, so that the snap-fit portion 122 engages with or disengages from the lock base 300 and the locking piece 12 switches between the locked state and the unlocked state. In other words, when the adjustment piece 13 rotates relative to the sleeve 11, it can drive the snap-fit portion 122 to rotate about an axis extending along the first direction X through the connecting portion 121. In this way, the extending direction of the snap-fit portion 122 is changed, allowing the snap-fit portion 122 to be attached to or detached from the lock base 300, so that the snap-fit portion 122 can engage with or disengage from the lock base 300.

In some embodiments, referring to FIG. 7 and further referring to FIG. 11, FIG. 11 is a schematic diagram of the connection between the locking mechanism 10 and the lock base 300 according to some embodiments of this application. The lock base 300 is provided with a lock hole 310 for insertion of the locking piece 12, and the lock hole 310 penetrates both sides of the lock base 300 along the first direction X. After the locking piece 12 is inserted into the lock hole 310, rotating the adjustment piece 13 can drive the snap-fit portion 122 of the locking piece 12 to rotate about an axis extending along the first direction X, so that the snap-fit portion 122 engages with a surface of the lock base 300 facing away from the sleeve 11. This allows the locking mechanism 10 to engage with the lock base 300 along the first direction X, achieving mutual locking between the locking mechanism 10 and the lock base 300. Conversely, when the adjustment piece 13 is rotated to drive the snap-fit portion 122 of the locking piece 12 to rotate to a position where a projection of the snap-fit portion 122 along the first direction X is located within the lock hole 310, the locking piece 12 can be withdrawn from the lock hole 310. This allows the locking mechanism 10 to disengage from the lock base 300 along the first direction X, achieving mutual unlocking between the locking mechanism 10 and the lock base 300.

The cross-section of the lock hole 310 is rectangular. When the extending direction of the snap-fit portion 122 aligns with the length direction of the cross-section of the lock hole 310, the snap-fit portion 122 can be inserted into or withdrawn from the lock hole 310. When the snap-fit portion 122 passes through the lock hole 310 and the extending direction of the snap-fit portion 122 intersects with the length direction of the cross-section of the lock hole 310, the snap-fit portion 122 can engage with the surface of the lock base 300 facing away from the sleeve 11.

Optionally, the surface of the lock base 300 for engagement with the snap-fit portion 122 is further provided with a snap-fit groove 320, and the extending direction of the snap-fit groove 320 is perpendicular to the length direction of the cross-section of the lock hole 310. When the snap-fit portion 122 rotates to a position where its extending direction is perpendicular to the length direction of the cross-section of the lock hole 310, the snap-fit portion 122 can engage with the lock base 300, and the snap-fit groove 320 can receive the snap-fit portion 122, mitigating vibration between the locking mechanism 10 and the lock base 300, thereby enhancing the stability of the mutual locking between the locking mechanism 10 and the lock base 300.

In some embodiments, referring to FIG. 7, along the first direction X, a snap-fit surface 111 is further formed at an end of the sleeve 11 close to the snap-fit portion 122, and the snap-fit surface 111 is configured to abut against a side of the lock base 300 facing the sleeve 11 when the locking piece 12 is in the locked state. When the locking mechanism 10 engages with the lock base 300 along the first direction X, the snap-fit portion 122 and the snap-fit surface 111 abut against two sides of the lock base 300 respectively along the first direction X. The snap-fit surface 111 of the sleeve 11 is configured to abut against the side of the lock base 300 facing the sleeve 11 when the locking piece 12 snaps into the lock base 300 in the locked state. In this way, the locking mechanism 10 can clamp the lock base 300 along the first direction X through the snap-fit portion 122 of the locking piece 12 and the snap-fit surface 111 of the sleeve 11, mitigating vibration during use of the locking mechanism 10 and enhancing the stability of the mutual locking between the locking mechanism 10 and the lock base 300.

The locking piece 12 is provided with the connecting portion 121 and the snap-fit portion 122 connected to one end of the connecting portion 121, with the snap-fit portion 122 protruding along its extending direction from the outer peripheral surface of the connecting portion 121. With the connecting portion 121 inserted into the sleeve 11 along the first direction X and threadedly connected to the adjustment piece 13, rotation of the adjustment piece 13 can drive the connecting portion 121 to rotate so that the snap-fit portion 122 rotates along with the connecting portion 121, thereby changing the extending direction of the snap-fit portion 122 in a plane perpendicular to the first direction X. This enables the snap-fit portion 122 to engage with or disengage from the lock base 300 after rotation, thereby allowing the locking mechanism 10 to engage with or disengage from the lock base 300 along the first direction X.

According to some embodiments of this application, referring to FIG. 6 and FIG. 7, the sleeve 11 is provided with a third limiting portion 112, the connecting portion 121 is provided with a fourth limiting portion 1211, and the third limiting portion 112 and the fourth limiting portion 1211 cooperate to restrict a rotation angle of the connecting portion 121.

The third limiting portion 112 and the fourth limiting portion 1211 cooperate to restrict the rotation angle of the connecting portion 121 relative to the sleeve 11. The third limiting portion 112 and the fourth limiting portion 1211 may have various structures. For example, the third limiting portion 112 may be a limiting groove provided on the inner peripheral surface of the sleeve 11, and correspondingly, the fourth limiting portion 1211 may be a protrusion provided on the outer peripheral surface of the connecting portion 121, with the protrusion inserted into the limiting groove to cooperate in restricting the rotation angle of the connecting portion 121. Alternatively, both the third limiting portion 112 and the fourth limiting portion 1211 may be protrusions, with the third limiting portion 112 protruding from an end of the sleeve 11 along the first direction X and the fourth limiting portion 1211 protruding from the outer peripheral surface of the connecting portion 121, so that the fourth limiting portion 1211 can abut against the third limiting portion 112 when the connecting portion 121 rotates relative to the sleeve 11, thereby restricting the rotation angle of the connecting portion 121 through the cooperation between the third limiting portion 112 and the fourth limiting portion 1211.

Optionally, one or more third limiting portions 112 and fourth limiting portions 1211 may be provided. For example, in this embodiment of this application, there are two third limiting portions 112 and two fourth limiting portions 1211, and the two fourth limiting portions 1211 are provided on two sides of the connecting portion 121 along its radial direction respectively.

Provided on the sleeve 11 and on the connecting portion 121 respectively, the third limiting portion 112 and the fourth limiting portion 1211 can cooperate to restrict the rotation angle of the connecting portion 121, so that the connecting portion 121 drives the snap-fit portion 122 to engage with or disengage from the lock base 300 under the cooperative restriction of the third limiting portion 112 and the fourth limiting portion 1211. This facilitates switching of the locking piece 12 between the locked state and the unlocked state, featuring simple structure and ease of operation. In addition, this can relieve the problem that the snap-fit portion 122 fails to engage with the lock base 300 due to excessive rotation along with the connecting portion 121, thereby enhancing the reliability of mutual locking between the locking mechanism 10 and the lock base 300.

According to some embodiments of this application, referring to FIG. 7 and FIG. 9, the third limiting portion 112 and the fourth limiting portion 1211 are further configured to cooperate to guide the connecting portion 121 to move along the first direction X when the adjustment piece 13 rotates relative to the sleeve 11, so that the locking piece 12 moves between the first position and the second position along the first direction X. When the locking piece 12 is located at the first position, the locking piece 12 is in the locked state, and the snap-fit portion 122 engages with the lock base 300. When the locking piece 12 is located at the second position, the locking piece 12 is in the unlocked state, and the snap-fit portion 122 disengages from the lock base 300.

The third limiting portion 112 and the fourth limiting portion 1211 are further configured to cooperate to guide the connecting portion 121 to move along the first direction X when the adjustment piece 13 rotates relative to the sleeve 11. This means that when the adjustment piece 13 drives the connecting portion 121 to rotate relative to the sleeve 11, the third limiting portion 112 and the fourth limiting portion 1211 cooperate to restrict the rotation angle of the connecting portion 121 while guiding the connecting portion 121 to move relative to the sleeve 11 along the first direction X. In this case, the locking piece 12 has two endpoint positions along the first direction X relative to the sleeve 11, namely, the first position and the second position. In other words, when the adjustment piece 13 drives the connecting portion 121 to rotate relative to the sleeve 11, the connecting portion 121 can also move along the first direction X relative to the sleeve 11. In this way, when the connecting portion 121 drives the snap-fit portion 122 to rotate to a position where the snap-fit portion 122 can engage with the side of the lock base 300 facing away from the sleeve 11, the locking piece 12 is located at the first position. Correspondingly, when the locking piece 12 moves to the second position, a projection of the snap-fit portion 122 along the first direction X is located within the lock hole 310 of the lock base 300, so that the locking piece 12 disengages from the lock base 300 along the first direction X.

When rotating relative to the sleeve 11, the adjustment piece 13 can drive the connecting portion 121 to rotate while driving the connecting portion 121 to move along the first direction X. For example, as shown in FIG. 7, the adjustment piece 13 and the connecting portion 121 are threadedly connected, so that the adjustment piece 13 drives the connecting portion 121 to rotate, and when the circumferential rotation of the connecting portion 121 is restricted, the adjustment piece 13 can provide a feed force for the connecting portion 121 along the first direction X to enable the connecting portion 121 to move along the first direction X.

In addition to restricting the rotation angle of the connecting portion 121, the third limiting portion 112 and the fourth limiting portion 1211 can further cooperate to guide the connecting portion 121 to move relative to the sleeve 11 along the first direction X, so that the adjustment piece 13 drives the connecting portion 121 to rotate relative to the sleeve 11 while driving the locking piece 12 to move between the first position and the second position along the first direction X. In this way, the adjustment piece 13 can drive the snap-fit portion 122 to engage with the lock base 300 while enabling the snap-fit portion 122 to abut against the lock base 300, reducing the gap between the snap-fit portion 122 and the lock base 300, thereby mitigating vibration between the locking mechanism 10 and the lock base 300.

According to some embodiments of this application, referring to FIG. 6 and FIG. 7, the third limiting portion 112 is a limiting groove provided on the inner peripheral surface of the sleeve 11, the fourth limiting portion 1211 is a protrusion provided on the outer peripheral surface of the connecting portion 121, and at least a portion of the protrusion is accommodated in the limiting groove.

The third limiting portion 112 is a limiting groove, and the fourth limiting portion 1211 is a protrusion. With the protrusion inserted into the limiting groove, the movement trajectory of the protrusion is restricted and guided by the limiting groove, so that the connecting portion 121 can restricts its rotation angle and move between the first position and the second position along the first direction X under the cooperative action of the third limiting portion 112 and the fourth limiting portion 1211.

It should be noted that, in other embodiments, the third limiting portion 112 and the fourth limiting portion 1211 may have other structures. For example, the third limiting portion 112 may be a protrusion provided on the inner peripheral surface of the sleeve 11, and correspondingly, the fourth limiting portion 1211 may be a limiting groove provided on the outer peripheral surface of the connecting portion 121.

The third limiting portion 112 and the fourth limiting portion 1211 are respectively a limiting groove provided on the inner peripheral surface of the sleeve 11 and a protrusion provided on the outer peripheral surface of the connecting portion 121. With the protrusion inserted into the limiting groove, under the limitation of the limiting groove, the rotation angle of the connecting portion 121 is restricted, and the protrusion can be guided by the limiting groove to enable the connecting portion 121 to move along the first direction X while rotating relative to the sleeve 11. The structure is simple, easy to implement, and highly stable.

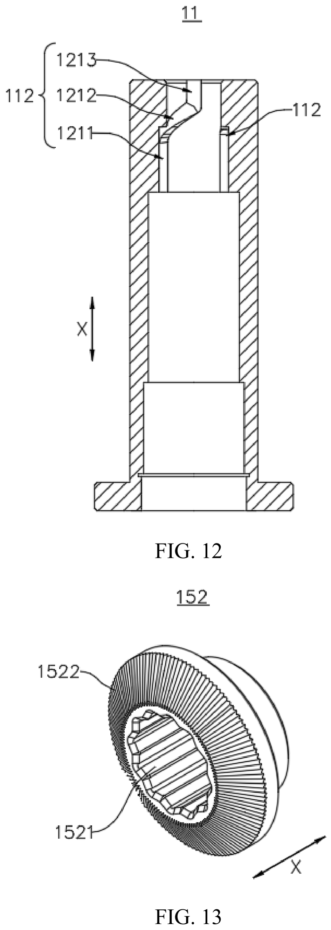

According to some embodiments of this application, referring to FIG. 7 and further referring to FIG. 12, FIG. 12 is a cross-sectional view of the sleeve 11 of the locking mechanism 10 according to some embodiments of this application. The limiting groove includes a first groove segment 1121, a second groove segment 1122, and a third groove segment 1123 connected in sequence, where the first groove segment 1121 and the third groove segment 1123 both extend along the first direction X, the first groove segment 1121 and the third groove segment 1123 are spaced apart along a circumferential direction of the connecting portion 121, and the first groove segment 1121 and the third groove segment 1123 are spaced apart along the first direction X. Along the first direction X, the third groove segment 1123 is closer to the snap-fit portion 122 than the first groove segment 1121. The protrusion is located in the first groove segment 1121 when the locking piece 12 is located at the first position, and the protrusion is located in the third groove segment 1123 when the locking piece 12 is located at the second position.

The first groove segment 1121 and the third groove segment 1123 are spaced apart along the circumferential direction of the connecting portion 121, and the first groove segment 1121 and the third groove segment 1123 are spaced apart along the first direction X. This means that the first groove segment 1121 and the third groove segment 1123 of the limiting groove are distant from each other along both the first direction X and the circumferential direction of the connecting portion 121. It should be noted that, since the first groove segment 1121 and the third groove segment 1123 are spaced apart both along the first direction X and the circumferential direction of the connecting portion 121, the second groove segment 1122 connecting the first groove segment 1121 and the third groove segment 1123 is a helical structure surrounding the connecting portion 121. In this case, when the protrusion is located in the first groove segment 1121 and the third groove segment 1123, the connecting portion 121 can move only along the first direction X under the driving of the adjustment piece 13, and when the protrusion is located in the second groove segment 1122, the connecting portion 121 can both move along the first direction X and rotate about an axis extending along the first direction X under the driving of the adjustment piece 13.

When the locking piece 12 is located at the first position, the protrusion is located in the first groove segment 1121, and when the locking piece 12 is located at the second position, the protrusion is located in the third groove segment 1123, meaning that after the protrusion of the connecting portion 121 moves from the first groove segment 1121 to the third groove segment 1123, the locking piece 12 can move from the first position to the second position.

Certainly, the structure of the limiting groove is not limited thereto. In some embodiments, the limiting groove may have other structures. For example, the limiting groove may extend along the first direction X and have a greater width in the circumferential direction of the connecting portion 121, so that the limiting groove has two opposite groove sidewalls in the circumferential direction of the connecting portion 121, where the two groove sidewalls are spaced apart along the circumferential direction of the connecting portion 121 and both configured to abut against the protrusion. The protrusion is inserted into the limiting groove and can move between the two groove sidewalls along the circumferential direction of the connecting portion 121 to restrict the rotation angle of the connecting portion 121. When the protrusion abuts against a groove sidewall of the limiting groove, the groove sidewall of the limiting groove can obstruct the rotation of the connecting portion 121, restricting the rotation angle of the connecting portion 121, and the protrusion of the connecting portion 121, after being obstructed by the groove sidewall of the limiting groove, can move along the first direction X under the guidance of the groove sidewall of the limiting groove. In this way, the connecting portion 121 moves along the first direction X.

The first groove segment 1121 and the third groove segment 1123 of the limiting groove are both configured to extend along the first direction X, and the first groove segment 1121 and the third groove segment 1123 are spaced apart both along the first direction X and the circumferential direction of the connecting portion 121, so that the second groove segment 1122 connecting the first groove segment 1121 and the third groove segment 1123 forms a helical groove. In this way, the protrusion of the connecting portion 121 moves along the first direction X only following the extending direction of the first groove segment 1121 and the second groove segment 1122 when located between the first groove segment 1121 and the third groove segment 1123, and rotates relative to the sleeve 11 and move along the first direction X following the extending direction of the second groove segment 1122 when located therein. This restricts the rotation angle of the locking piece 12 and allows it to move between the first position and the second position along the first direction X. Additionally, the third groove segment 1123 is configured to be closer to the snap-fit portion 122 than the first groove segment 1121 along the first direction X. In this case, when the protrusion is located in the first groove segment 1121, the snap-fit portion 122 can engage with the lock base 300 while being closer to the sleeve 11, allowing the snap-fit portion 122 to abut against the lock base 300 along the first direction X.

According to some embodiments of this application, referring to FIG. 6 and FIG. 7, the adjustment piece 13 includes a connecting segment 134 provided within the sleeve 11, the connecting segment 134 is sleeved outside the connecting portion 121, and the connecting segment 134 is threadedly connected to the connecting portion 121.

The connecting segment 134 is sleeved outside the connecting portion 121, and the connecting segment 134 is threadedly connected to the connecting portion 121, allowing for the threaded connection between the locking piece 12 and the adjustment piece 13, meaning that the connecting segment 134 of the adjustment piece 13 is threadedly connected to the outside of the connecting portion 121. In other words, the adjustment piece 13 is sleeved outside the connecting portion 121, with internal threads provided on the inner peripheral surface of the adjustment piece 13 and external threads provided on the outer peripheral surface of the connecting portion 121, so that the connecting portion 121 and the connecting segment 134 are threadedly connected. Certainly, in other embodiments, the locking mechanism 10 may alternatively be a structure where the connecting portion 121 is threadedly connected to the outside of the connecting segment 134 of the adjustment piece 13.

The adjustment piece 13 has the connecting segment 134 threadedly connected to the outside of the connecting portion 121, allowing for the threaded connection between the locking piece 12 and the adjustment piece 13. In this case, the adjustment piece 13 can drive the connecting portion 121 to rotate together, and when the circumferential rotation of the connecting portion 121 is restricted, the adjustment piece 13 can provide a feed force for the connecting portion 121 along the first direction X to enable the connecting portion 121 to move along the first direction X. The structure is simple and easy to implement.

According to some embodiments of this application, referring to FIG. 6, FIG. 7, and FIG. 8, the locking mechanism 10 further includes a securing assembly 15 provided between the sleeve 11 and the adjustment piece 13, where the securing assembly 15 is configured to selectively lock the adjustment piece 13 to the sleeve 11 to prevent the adjustment piece 13 from rotating relative to the sleeve 11.

The securing assembly 15 is configured to selectively lock the adjustment piece 13 with the sleeve 11 to prevent the adjustment piece 13 from rotating relative to the sleeve 11, meaning that the securing assembly 15 can selectively lock or unlock the adjustment piece 13 and the sleeve 11. When the securing assembly 15 locks the adjustment piece 13 with the sleeve 11, the adjustment piece 13 cannot rotate relative to the sleeve 11. When the securing assembly 15 unlocks the adjustment piece 13 from the sleeve 11, the adjustment piece 13 can rotate relative to the sleeve 11.

The locking mechanism 10 is further provided with the securing assembly 15. The securing assembly 15 can be provided between the sleeve 11 and the adjustment piece 13 to selectively lock the adjustment piece 13 with the sleeve 11. Specifically, when the securing assembly 15 unlocks the sleeve 11 and the adjustment piece 13, the securing assembly 15 allows the adjustment piece 13 to rotate relative to the sleeve 11, driving the locking piece 12 to move relative to the sleeve 11, enabling the locking piece 12 to snap into or out of the lock base 300. When the securing assembly 15 locks the sleeve 11 with the adjustment piece 13, the securing assembly 15 can control rotation of the adjustment piece 13 relative to the sleeve 11. This can reduce the risk of the locking piece 12 failing to snap into the lock base 300 due to unexpected rotation of the adjustment piece 13, enhancing the effects of locking between the locking piece 12 and the lock base 300 and helping improve the stability and reliability of mutual locking between the locking mechanism 10 and the lock base 300.

According to some embodiments of this application, referring to FIG. 6, FIG. 7, and FIG. 8, the securing assembly 15 includes a first clutch member 151 and a second clutch member 152. The first clutch member 151 is provided on the sleeve 11, and the second clutch member 152 is provided on the adjustment piece 13. The first clutch member 151 and the second clutch member 152 are configured to: when engaged with each other, prevent the adjustment piece 13 from rotating relative to the sleeve 11; and when disengaged from each other, allow the adjustment piece 13 to rotate relative to the sleeve 11.

When engaged with each other, the first clutch member 151 and the second clutch member 152 prevents the adjustment piece 13 from rotating relative to the sleeve 11, and when disengaged from each other, the first clutch member 151 and the second clutch member 152 allows the adjustment piece 13 to rotate relative to the sleeve 11. Optionally, the first clutch member 151 and the second clutch member 152 may have various structures. For example, the first clutch member 151 may be fixed to the inner side of the sleeve 11, and the second clutch member 152 may be sleeved outside the adjustment piece 13 movably along the first direction X and circumferentially locked with the adjustment piece 13. In other words, the second clutch member 152 can move relative to the adjustment piece 13 along the first direction X but cannot rotate circumferentially relative to the adjustment piece 13. When the second clutch member 152 moves along the first direction X to engage with the first clutch member 151, the first clutch member 151 and the second clutch member 152 can cooperate to prevent the adjustment piece 13 from rotating relative to the sleeve 11. Conversely, when the first clutch member 151 and the second clutch member 152 are disengaged, the adjustment piece 13 can rotate relative to the sleeve 11. Alternatively, the first clutch member 151 may be provided within the sleeve 11 movably along the first direction X and circumferentially locked with the sleeve 11, and correspondingly, the second clutch member 152 may be fixedly sleeved outside the adjustment piece 13.

Certainly, the structure of the securing assembly 15 is not limited thereto. In other embodiments, the securing assembly 15 may have other structures. For example, the securing assembly 15 may be a bolt threadedly connected to the sleeve 11. When the bolt is tightened, the bolt abuts against the adjustment piece 13 to prevent the adjustment piece 13 from rotating relative to the sleeve 11. When the bolt is loosened, the bolt is separated from the adjustment piece 13, allowing the adjustment piece 13 to rotate relative to the sleeve 11. In this way, the securing assembly 15 can selectively lock the adjustment piece 13 with the sleeve 11.

The securing assembly 15 is provided with the first clutch member 151 and the second clutch member 152 capable of engaging with or disengaging from each other, and the first clutch member 151 and the second clutch member 152 are provided on the sleeve 11 and the adjustment piece 13 respectively. In this way, the first clutch member 151 and the second clutch member 152 can engage to prevent the adjustment piece 13 from rotating relative to the sleeve 11, and the first clutch member 151 and the second clutch member 152 can disengage to allow the adjustment piece 13 to rotate relative to the sleeve 11, so that the securing assembly 15 can selectively lock the adjustment piece 13 with the sleeve 11.

In some embodiments, referring to FIG. 6, FIG. 7, and FIG. 8, the first clutch member 151 and the second clutch member 152 are arranged along the first direction X; where the first clutch member 151 is fixed to the sleeve 11, the second clutch member 152 is circumferentially locked with the adjustment piece 13, and the second clutch member 152 is provided on the adjustment piece 13 movably along the first direction X, so that the second clutch member 152 is able to engage with or disengage from the first clutch member 151.

The first clutch member 151 is fixed to the inner side of the sleeve 11, and the first clutch member 151 and the sleeve 11 may be fixedly connected by various means. For example, the first clutch member 151 may be fixedly connected to the sleeve 11 by welding, adhesion, or snap-fit.

The second clutch member 152 is circumferentially locked with the adjustment piece 13, and the second clutch member 152 is provided on the adjustment piece 13 movably along the first direction X, meaning that the second clutch member 152 can move relative to the adjustment piece 13 along the first direction X but cannot rotate circumferentially relative to the adjustment piece 13, so that the second clutch member 152 can engage with or disengage from the first clutch member 151 by moving along the first direction X.

For example, the second clutch member 152 is sleeved outside the adjustment piece 13.

The first clutch member 151 and the second clutch member 152 are arranged along the first direction X, with the second clutch member 152 provided on the adjustment piece 13 movably along the first direction X. With the first clutch member 151 fixed to the sleeve 11 and the second clutch member 152 configured to be circumferentially locked with the adjustment piece 13, the second clutch member 152 can engage with or disengage from the first clutch member 151 simply by moving the second clutch member 152, so as to prevent or permit rotation of the adjustment piece 13 relative to the sleeve 11. This securing assembly 15 is simple in structure and easy to operate and implement.

According to some embodiments of this application, referring to FIG. 6, FIG. 7, FIG. 8, and further referring to FIG. 13, FIG. 13 is a schematic structural diagram of the second clutch member 152 of the securing assembly 15 of the locking mechanism 10 according to some embodiments of this application. The adjustment piece 13 includes a guide segment 135 provided within the sleeve 11, the second clutch member 152 is sleeved outside the guide segment 135 movably along the first direction X, an outer peripheral surface of the guide segment 135 is provided with a first circumferential limiting portion 1351, an inner peripheral surface of the second clutch member 152 being provided with a second circumferential limiting portion 1521, and the second circumferential limiting portion 1521 cooperates with the first circumferential limiting portion 1351 to achieve circumferential locking of the second clutch member 152 with the adjustment piece 13.

The guide segment 135 is connected to one end of the connecting segment 134, and the guide segment 135 is farther from the snap-fit portion 122 than the connecting segment 134 along the first direction X. The first clutch member 151 is fixed within the sleeve 11 and surrounds the adjustment piece 13, and the second clutch member 152 is sleeved outside the guide segment 135 of the adjustment piece 13 movably along the first direction X, so that the second clutch member 152 can move relative to the adjustment piece 13 along the first direction X to engage with or disengage from the first clutch member 151.

The outer peripheral surface of the guide segment 135 is provided with the first circumferential limiting portion 1351, and the inner peripheral surface of the second clutch member 152 is provided with the second circumferential limiting portion 1521, where the first circumferential limiting portion 1351 and the second circumferential limiting portion 1521 cooperate to restrict circumferential rotation of the second clutch member 152 relative to the adjustment piece 13. This enables the first clutch member 151 to restrict rotation of the second clutch member 152 relative to the sleeve 11 when the second clutch member 152 engages with the first clutch member 151, thereby further controlling rotation of the adjustment piece 13 relative to the sleeve 11.

Optionally, the first circumferential limiting portion 1351 and the second circumferential limiting portion 1521 may have various structures. For example, the first circumferential limiting portion 1351 may be a protrusion provided on the outer peripheral surface of the guide segment 135 of the adjustment piece 13, and the protrusion extends along the first direction X. Correspondingly, the second circumferential limiting portion 1521 may be a guide groove provided on the inner peripheral surface of the second clutch member 152, and the guide groove extends along the first direction X. The protrusion is snapped within the guide groove to enable the second clutch member 152 to move along the first direction X relative to the guide segment 135 of the adjustment piece 13 while being circumferentially locked with the guide segment 135 of the adjustment piece 13. Alternatively, the first circumferential limiting portion 1351 may be a guide groove provided on the outer peripheral surface of the guide segment 135 of the adjustment piece 13, and correspondingly, the second circumferential limiting portion 1521 may be a protrusion provided on the inner peripheral surface of the second clutch member 152.

It should be noted that, in the embodiment where one end of the adjustment piece 13 is provided with the mounting channel 133 and the actuating portion 132 is provided in the mounting channel 133, the mounting channel 133 is provided within the guide segment 135 and penetrates an end of the guide segment 135 away from the connecting segment 134 along the first direction X. Correspondingly, the actuating portion 132 is connected within the guide segment 135.

The adjustment piece 13 has the guide segment 135, and the second clutch member 152 is sleeved outside the guide segment 135 movably along the first direction X. By providing the first circumferential limiting portion 1351 on the outer peripheral surface of the guide segment 135 and the second circumferential limiting portion 1521 on the inner peripheral surface of the second clutch member 152 that cooperates with the first circumferential limiting portion 1351, the second clutch member 152 can move relative to the adjustment piece 13 along the first direction X while being circumferentially locked.

In some embodiments, the first circumferential limiting portion 1351 is a spline extending along the first direction X, and the second circumferential limiting portion 1521 is a spline groove matching the spline.

The first circumferential limiting portion 1351 and the second circumferential limiting portion 1521 are configured as a spline and a spline groove extending along the first direction X. Specifically, the outer peripheral surface of the guide segment 135 of the adjustment piece 13 is provided with the spline extending along the first direction X, and the inner peripheral surface of the second clutch member 152 is provided with the spline groove cooperating with the spline. This allows the second clutch member 152 to be circumferentially locked with the adjustment piece 13 while movable relative to the adjustment piece 13 along the first direction X. The structure is simple and highly stable.

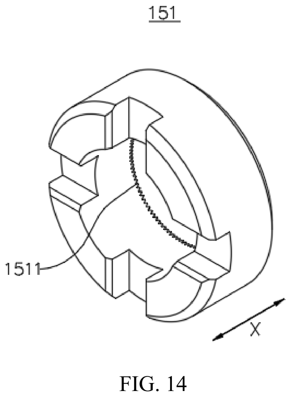

According to some embodiments of this application, referring to FIG. 6 and FIG. 13, and further referring to FIG. 14, FIG. 14 is a schematic structural diagram of the first clutch member 151 of the securing assembly 15 of the locking mechanism 10 according to some embodiments of this application. Along the first direction X, an end of the first clutch member 151 facing the second clutch member 152 is provided with a first toothed portion 1511, and an end of the second clutch member 152 facing the first clutch member 151 is provided with a second toothed portion 1522, and the second toothed portion 1522 is configured to engage with the first toothed portion 1511 to engage the second clutch member 152 with the first clutch member 151.

The first toothed portion 1511 is a toothed structure provided at the end of the first clutch member 151 facing the second clutch member 152, where multiple teeth of the first toothed portion 1511 are arranged along a circumferential direction of the first clutch member 151, and each tooth extends along the radial direction of the first clutch member 151. The second toothed portion 1522 is a toothed structure provided at the end of the second clutch member 152 facing the first clutch member 151, where multiple teeth of the second toothed portion 1522 are arranged along a circumferential direction of the second clutch member 152, and each tooth extends along the radial direction of the second clutch member 152. When the second clutch member 152 moves along the first direction X and approaches the first clutch member 151, the second toothed portion 1522 and the first toothed portion 1511 can engage with each other, achieving engagement of the second clutch member 152 with the first clutch member 151 to prevent the adjustment piece 13 from rotating relative to the sleeve 11.

It should be noted that, in other embodiments, the first clutch member 151 and the second clutch member 152 may have other structures. For example, the first clutch member 151 may be provided with a limiting hole at the end facing the second clutch member 152 along the first direction X, and the second clutch member 152 may be provided with a pin at the end facing the first clutch member 151 along the first direction X. When the second clutch member 152 moves along the first direction X and approaches the first clutch member 151, the pin can be inserted into the limiting hole to engage the second clutch member 152 with the first clutch member 151, thereby preventing the adjustment piece 13 from rotating relative to the sleeve 11.

The first toothed portion 1511 is provided at the end of the first clutch member 151 facing the second clutch member 152, and the second toothed portion 1522 is provided at the end of the second clutch member 152 facing the first clutch member 151, so that the second toothed portion 1522 can engage with or disengage from the first toothed portion 1511 when the second clutch member 152 moves along the first direction X, achieving engagement or disengagement of the second clutch member 152 with the first clutch member 151. This allows the first clutch member 151 and the second clutch member 152 to cooperate to prevent the adjustment piece 13 from rotating relative to the sleeve 11 when the first toothed portion 1511 and the second toothed portion 1522 are engaged. The structure is simple and easy to implement. Additionally, providing the first toothed portion 1511 and the second toothed portion 1522 on the first clutch member 151 and the second clutch member 152 simplifies the engagement and disengagement between the first clutch member 151 and the second clutch member 152, which helps the first clutch member 151 engage with or disengage from the second clutch member 152.

According to some embodiments of this application, referring to FIG. 8, along the first direction X, a first inclined surface 1512 is formed at an end of the first clutch member 151 facing the second clutch member 152, a second inclined surface 1523 is formed at an end of the second clutch member 152 facing the first clutch member 151, and the second inclined surface 1523 mates with the first inclined surface 1512; where the first toothed portion 1511 is provided on the first inclined surface 1512, and the second toothed portion 1522 is provided on the second inclined surface 1523.

The second inclined surface 1523 mates with the first inclined surface 1512, meaning that the first inclined surface 1512 provided on the first clutch member 151 and the second inclined surface 1523 provided on the second clutch member 152 have the same shape, so that the first inclined surface 1512 fits with the second inclined surface 1523.

The first toothed portion 1511 is provided on the first inclined surface 1512, and the second toothed portion 1522 is provided on the second inclined surface 1523, meaning that the first toothed portion 1511 protrudes from the first inclined surface 1512, and the second toothed portion 1522 protrudes from the second inclined surface 1523.

The first inclined surface 1512 is provided at the end of the first clutch member 151 facing the second clutch member 152 and the first toothed portion 1511 provided on the first inclined surface 1512. Correspondingly, the second inclined surface 1523 mating with the first inclined surface 1512 is provided at the end of the second clutch member 152 facing the first clutch member 151 and the second toothed portion 1522 is provided on the second inclined surface 1523. This structure is an inclined structure in which the first toothed portion 1511 and the second toothed portion 1522 mate with each other, providing guidance for facilitating engagement between the first toothed portion 1511 and the second toothed portion 1522.

In some embodiments, referring to FIG. 8, FIG. 13, and FIG. 14, the first inclined surface 1512 is a concave surface provided on the first clutch member 151, and the second inclined surface 1523 is a convex surface provided on the second clutch member 152.

The first inclined surface 1512 is a concave surface provided on the first clutch member 151, meaning that the first inclined surface 1512 is a concave inclined surface provided at the end of the first clutch member 151 facing the second clutch member 152, so that the first inclined surface 1512 is a conical surface recessed toward the interior of the first clutch member 151.

The second inclined surface 1523 is a convex surface provided on the second clutch member 152, meaning the second inclined surface 1523 is a convex inclined surface provided at the end of the second clutch member 152 facing the first clutch member 151, so that the second inclined surface 1523 is a conical surface protruding toward the exterior of the second clutch member 152.

With the first inclined surface 1512 configured as a concave surface and the second inclined surface 1523 as a convex surface, the second clutch member 152 can be inserted into the first clutch member 151 when the second toothed portion 1522 of the second clutch member 152 engages with the first toothed portion 1511 of the first clutch member 151, enhancing the stability and reliability of the engagement between the second clutch member 152 and the first clutch member 151, and reducing the possibility of slippage during engagement therebetween.

According to some embodiments of this application, referring to FIG. 6, FIG. 7, and FIG. 8, the securing assembly 15 further includes a second elastic member 153 provided between the sleeve 11 and the second clutch member 152, and the second elastic member 153 is configured to drive the second clutch member 152 to move along the first direction X toward the first clutch member 151, so that the second clutch member 152 engages with the first clutch member 151.

The second elastic member 153 is provided between the sleeve 11 and the second clutch member 152 to provide an elastic force to the second clutch member 152, so that the second clutch member 152 tends to move along the first direction X toward the first clutch member 151. In actual use, the adjustment piece 13 can be driven to rotate relative to the sleeve 11 by overcoming the elastic force of the second elastic member 153 and pushing the second clutch member 152 to disengage, so that the locking piece 12 switches between the locked state and the unlocked state. After the state switch of the locking piece 12 is completed, releasing the force against the second clutch member 152 allows the second clutch member 152 to move toward and engage with the first clutch member 151 under the elastic force of the second elastic member 153, so as to prevent the adjustment piece 13 from rotating relative to the sleeve 11.

Optionally, the second elastic member 153 may have various structures. For example, the second elastic member 153 may be a spring, elastic piece, or elastic rubber provided between the sleeve 11 and the second clutch member 152. For example, in FIG. 6 and FIG. 8, the second elastic member 153 is a spring sleeved outside the guide segment 135 of the adjustment piece 13, with two ends of the spring respectively abutting against the inner peripheral wall of the sleeve 11 and the side of the second clutch member 152 facing away from the first clutch member 151.

It should be noted that the second elastic member 153 provided between the sleeve 11 and the second clutch member 152 may have various structures. For example, two ends of the second elastic member 153 may be directly connected to the sleeve 11 and the second clutch member 152 respectively, or may be indirectly connected to the sleeve 11 and the second clutch member 152, that is, the second elastic member 153 is connected to the sleeve 11 and the second clutch member 152 via other components.

In some embodiments, referring to FIG. 6, FIG. 7, and FIG. 8, the securing assembly 15 further includes a stop block 154. The stop block 154 is connected within the sleeve 11 and surrounds the outer side of the guide segment 135 of the adjustment piece 13, the elastic member is sleeved outside the guide segment 135 of the adjustment piece 13, and two ends of the elastic member along the first direction X abut against the stop block 154 and the second clutch member 152 respectively. The securing assembly 15 of this structure helps simplify the assembly of the elastic member between the sleeve 11 and the second clutch member 152 and enhances the assembly stability of the elastic member between the sleeve 11 and the second clutch member 152, reducing the risk of the elastic member detaching.

The stop block 154 is connected within the sleeve 11 and surrounds the outer side of the adjustment piece 13, meaning that the stop block 154 is sleeved outside the adjustment piece 13 and connected to an inner peripheral wall of the sleeve 11. For example, the stop block 154 and the sleeve 11 may be connected by various means, such as welding, adhesion, or snap-fit.

Two ends of the elastic member along the first direction X abut against the stop block 154 and the second clutch member 152 respectively, meaning that one end of the elastic member abuts against the second clutch member 152, and the other end indirectly abuts against the sleeve 11 via the stop block 154.

The securing assembly 15 further includes a second elastic member 153 provided between the sleeve 11 and the second clutch member 152. The second elastic member 153 can apply a force to the second clutch member 152 along the first direction X toward the first clutch member 151, allowing for engagement between the first clutch member 151 and the second clutch member 152. The securing assembly 15 of this structure further enhances the stability of engagement between the first clutch member 151 and the second clutch member 152, reducing the possibility of unexpected disengagement between the first clutch member 151 and the second clutch member 152. In addition, the second clutch member 152 and the first clutch member 151 can engage via the second elastic member 153 after disengagement, without requiring manual intervention, achieving ease of operation and use.

According to some embodiments of this application, this application further provides a battery assembly 100 including a battery 20 and the locking mechanism 10 according to any one of the foregoing solutions, where the locking mechanism 10 is mounted on the battery 20.

Referring to FIG. 3 and FIG. 4, the battery 20 may include a box 21 and a battery cell 22, where the battery cell 22 is configured to be accommodated in the box 21, and the locking mechanism 10 is mounted on the box 21.

Optionally, the locking mechanism 10 mounted on the battery 20 may have various structures. For example, the locking mechanism 10 may be connected to the battery 20 by bolting, adhesion, welding, or snap-fit.

With the locking mechanism 10 mounted on the battery 20, the battery 20 can engage with or disengage from the lock base 300 of a target component through the locking mechanism 10, so as to swap the battery 20.

According to some embodiments of this application, this application further provides an electric device. Referring to FIG. 2, FIG. 3, and FIG. 11, the electric device includes a lock base 300 and the battery assembly 100 according to any one of the foregoing solutions, where the locking mechanism 10 is configured to engage with or disengage from the lock base 300 along a first direction X, and the battery 20 of the battery assembly 100 is configured to supply electric energy to the electric device.

The electric device may be any device or system that uses the battery 20 as described above.

For ease of explanation, an example in which the electric device is a vehicle 1000 according to an embodiment of this application is used for description in the following embodiments.

The vehicle 1000 has a mounting frame 200, and a lock base 300 mounted on the mounting frame 200. Optionally, the lock base 300 and the mounting frame 200 may be integrated or separated. When the lock base 300 and the mounting frame 200 are integrated, the lock base 300 is a part of the mounting frame 200; when the lock base 300 and the mounting frame 200 are separated, the lock base 300 may be connected to the mounting frame 200 by welding, bolting, or snap-fit. For example, as shown in FIG. 2, the lock base 300 and the mounting frame 200 are separated, and the lock base 300 is bolted to the mounting frame 200.

The battery assembly 100 includes a locking mechanism 10 and a battery 20, where the locking mechanism 10 is mounted on the battery 20, and the locking mechanism 10 is configured to engage with or disengage from the lock base 300 for battery swapping of the vehicle 1000.

In some embodiments, referring to FIG. 11, the lock base 300 is provided with a lock hole 310 for insertion of a locking piece 12, and the lock hole 310 penetrates two sides of the lock base 300 along the first direction X. After the locking piece 12 is inserted into the lock hole 310, rotating an adjustment piece 13 can drive a snap-fit portion 122 of the locking piece 12 to rotate about an axis extending along the first direction X, so that the snap-fit portion 122 engages with a surface of the lock base 300 facing away from a sleeve 11. This allows the locking mechanism 10 to engage with the lock base 300 along the first direction X, achieving mutual locking between the locking mechanism 10 and the lock base 300. Conversely, when the adjustment piece 13 rotates to drive the snap-fit portion 122 of the locking piece 12 to rotate to a position where a projection of the snap-fit portion 122 along the first direction X is located within the lock hole 310, the locking piece 12 can be withdrawn from the lock hole 310, allowing the locking mechanism 10 to disengage from the lock base 300 along the first direction X, achieving mutual unlocking between the locking mechanism 10 and the lock base 300.

The cross-section of the lock hole 310 is rectangular. When the extending direction of the snap-fit portion 122 aligns with the length direction of the cross-section of the lock hole 310, the snap-fit portion 122 can be inserted into or withdrawn from the lock hole 310. When the snap-fit portion 122 passes through the lock hole 310 and the extending direction of the snap-fit portion 122 intersects with the length direction of the cross-section of the lock hole 310, the snap-fit portion 122 engages with the surface of the lock base 300 facing away from the sleeve 11.

Optionally, the surface of the lock base 300 for engagement with the snap-fit portion 122 is further provided with a snap-fit groove 320, and an extending direction of the snap-fit groove 320 is perpendicular to the length direction of the cross-section of the lock hole 310. When the snap-fit portion 122 rotates to a position where its extending direction is perpendicular to the length direction of the cross-section of the lock hole 310, the snap-fit portion 122 engages with the lock base 300, and the snap-fit groove 320 can receive the snap-fit portion 122, mitigating vibration between the locking mechanism 10 and the lock base 300, thereby enhancing the stability of the mutual locking between the locking mechanism 10 and the lock base 300.

According to some embodiments of this application, referring to FIG. 11, this application further provides a locking apparatus including a lock base 300 and the locking mechanism 10 according to any one of the foregoing solutions, where the locking mechanism 10 is configured to engage with or disengage from the lock base 300 along a first direction X.

According to some embodiments of this application, referring to FIG. 5 to FIG. 14, this application provides a locking mechanism 10 configured to engage with or disengage from a lock base 300 along a first direction X, where the locking mechanism 10 includes a sleeve 11, a locking piece 12, an adjustment piece 13, and a fastening assembly 14. The locking piece 12 is movably provided in the sleeve 11, where the locking piece 12 has a locked state and an unlocked state, the locking piece 12 is configured to snap into the lock base 300 in the locked state to enable the locking mechanism 10 to engage with the lock base 300 along the first direction X, and the locking piece 12 is configured to snap out of the lock base 300 in the unlocked state to disengage the locking mechanism 10 from the lock base 300 along the first direction X. The locking piece 12 includes a connecting portion 121, a snap-fit portion 122, and a mounting portion 123. The connecting portion 121 extends along the first direction X and is inserted into the sleeve 11, and the connecting portion 121 is threadedly connected to the adjustment piece 13. The snap-fit portion 122 is located outside the sleeve 11 and connected to an end of the connecting portion 121 away from the sleeve 11, the snap-fit portion 122 protrudes along its extending direction from an outer peripheral surface of the connecting portion 121, and the snap-fit portion 122 is configured to engage with the lock base 300, where the extending direction of the snap-fit portion 122 is perpendicular to the first direction X. The mounting portion 123 is connected to an end of the connecting portion 121 away from the snap-fit portion 122. The adjustment piece 13 is configured to drive the connecting portion 121 to rotate through rotating relative to the sleeve 11, so that the snap-fit portion 122 engages with or disengages from the lock base 300, thereby allowing the locking piece 12 to switch between the locked state and the unlocked state. The sleeve 11 is provided with a third limiting portion 112, the connecting portion 121 is provided with a fourth limiting portion 1211, and the third limiting portion 112 and the fourth limiting portion 1211 cooperate to restrict a rotation angle of the connecting portion 121. The third limiting portion 112 and the fourth limiting portion 1211 are further configured to cooperate to guide the connecting portion 121 to move along the first direction X when the adjustment piece 13 rotates relative to the sleeve 11, so that the locking piece 12 moves between a first position and a second position along the first direction X. When the locking piece 12 is located at the first position, the locking piece 12 is in the locked state, so that the snap-fit portion 122 engages with the lock base 300. When the locking piece 12 is located at the second position, the locking piece 12 is in the unlocked state, and the snap-fit portion 122 disengages from the lock base 300. The third limiting portion 112 is a limiting groove provided on an inner peripheral surface of the sleeve 11, the fourth limiting portion 1211 is a protrusion provided on an outer peripheral surface of the connecting portion 121, and at least a portion of the protrusion is accommodated in the limiting groove. The limiting groove includes a first groove segment 1121, a second groove segment 1122, and a third groove segment 1123 connected in sequence, where the first groove segment 1121 and the third groove segment 1123 both extend along the first direction X, the first groove segment 1121 and the third groove segment 1123 are spaced apart along a circumferential direction of the connecting portion 121, and the first groove segment 1121 and the third groove segment 1123 are spaced apart along the first direction X. Along the first direction X, the third groove segment 1123 is closer to the snap-fit portion 122 than the first groove segment 1121. When the locking piece 12 is located at the first position, the protrusion is located in the first groove segment 1121, and when the locking piece 12 is located at the second position, the protrusion is located in the third groove segment 1123. The adjustment piece 13 is connected within the sleeve 11 rotatably about an axis extending along the first direction X. The adjustment piece 13 includes a connecting segment 134 provided within the sleeve 11, the connecting segment 134 is sleeved outside the connecting portion 121, and the connecting segment 134 is threadedly connected to the connecting portion 121. The fastening assembly 14 is provided on the locking piece 12. An inner surface of the adjustment piece 13 includes an abutment surface 131. An accommodating cavity 1232 is formed inside the mounting portion 123, the accommodating cavity 1232 penetrates an end of the mounting portion 123 away from the connecting portion 121 along the first direction X, and a mounting hole 1231 is provided on the outer peripheral surface of the mounting portion 123, where the mounting hole 1231 communicates with the accommodating cavity. The fastening assembly 14 includes a snap-fit member 141, a moving member 142, and a first elastic member 143. The snap-fit member 141 is movably provided within the mounting hole 1231, and the snap-fit member 141 is configured to abut against the abutment surface 131 after protruding from the outer peripheral surface of the mounting portion 123 or to leave the abutment surface 131 after retracting into the mounting portion 123. The moving member 142 is provided within the accommodating cavity 1232 movably along the first direction X, and the moving member 142 being configured to: when moving relative to the mounting portion 123 along the first direction X, push the snap-fit member 141 to protrude from the outer peripheral surface of the mounting portion 123 or allow the snap-fit member 141 to retract into the mounting portion 123, so that the snap-fit member 141 abuts against or leaves the abutment surface 131. The adjustment piece 13 is provided with an actuating portion 132, the actuating portion 132 and the mounting portion 123 are arranged along the first direction X, an end of the actuating portion 132 facing the mounting portion 123 is provided with a protruding portion 1321, and the protruding portion 1321 is configured to be inserted into the mounting portion 123 to abut against the moving member 142. The actuating portion 132 is configured to: when the locking piece 12 moves from the second position to the first position, abut against the moving member 142 and push the moving member 142 to move so that the moving member 142 pushes the snap-fit member 141 to protrude from the outer peripheral surface of the mounting portion 123; and when the locking piece 12 moves from the first position to the second position, leave the moving member 142 so that the moving member 142 allows the snap-fit member 141 to retract into the mounting portion 123. The first elastic member 143 is provided between the moving member 142 and a bottom surface of the accommodating cavity 1232, and the first elastic member 143 is configured to drive the moving member 142 to move along the first direction X toward the actuating portion 132, so that the moving member 142 allows the snap-fit member 141 to retract into the mounting portion 123. A first limiting portion 1233 is provided inside the mounting portion 123, the moving member 142 is provided with a second limiting portion 1421, and the first limiting portion 1233 and the second limiting portion 1421 cooperate to restrict the range of movement of the moving member 142 relative to the mounting portion 123 along the first direction X. The first limiting portion 1233 is an annular limiting block provided on the inner peripheral surface of the mounting portion 123, and the second limiting portion 1421 is an annular groove provided on the outer peripheral surface of the moving member 142, with at least a portion of the limiting block being accommodated in the groove.

It should be noted that, in absence of conflict, the embodiments and features in the embodiments in this application may be combined with each other.

The foregoing descriptions are merely preferred embodiments of this application but are not intended to limit this application. Persons skilled in the art understand that this application may have various modifications and variations. Any modifications, equivalent replacements, and improvements made without departing from the spirit and principle of this application shall fall within the protection scope of this application.

## Claims

1. A locking mechanism, configured to engage with or disengage from a lock base along a first direction, wherein the locking mechanism comprises:
a sleeve;
a locking piece movably provided in the sleeve, wherein the locking piece has a locked state and an unlocked state, the locking piece is configured to snap into the lock base in the locked state to engage the locking mechanism with the lock base along the first direction, and the locking piece is configured to snap out of the lock base in the unlocked state to disengage the locking mechanism from the lock base along the first direction;
an adjustment piece connected within the sleeve rotatably about an axis extending along the first direction, wherein the adjustment piece is threadedly connected to the locking piece, and the adjustment piece is configured to drive, when rotating relative to the sleeve, the locking piece to move relative to the sleeve, so that the locking piece switches between the locked state and the unlocked state; and
a fastening assembly configured to prevent the locking piece from moving relative to the adjustment piece in a direction from the adjustment piece toward the lock base along the first direction when the locking piece is in the locked state.

2. The locking mechanism according to claim 1, wherein the fastening assembly is provided on the locking piece, the adjustment piece has an abutment surface, and the fastening assembly is configured to abut against the abutment surface in the direction from the adjustment piece toward the lock base along the first direction when the locking piece is in the locked state.

3. The locking mechanism according to claim 2, wherein the locking piece has a mounting portion inserted into the adjustment piece along the first direction, and an inner surface of the adjustment piece comprises the abutment surface; and
the fastening assembly comprises a snap-fit member movably provided on the mounting portion, wherein the snap-fit member is configured to abut against the abutment surface after protruding from an outer peripheral surface of the mounting portion or to leave the abutment surface after retracting into the mounting portion.

4. The locking mechanism according to claim 3, wherein the fastening assembly further comprises:
a moving member provided within the mounting portion movably along the first direction, wherein the moving member is configured to: when moving relative to the mounting portion along the first direction, push the snap-fit member to protrude from the outer peripheral surface of the mounting portion or allow the snap-fit member to retract into the mounting portion, so that the snap-fit member abuts against or leaves the abutment surface.

5. The locking mechanism according to claim 4, wherein the adjustment piece is configured to drive, when rotating relative to the sleeve, the locking piece to move between a first position and a second position along the first direction, and the locking piece is in the locked state when located at the first position and in the unlocked state when located at the second position;
wherein the adjustment piece is provided with an actuating portion, and the actuating portion is configured to: when the locking piece moves from the second position to the first position, abut against the moving member and push the moving member to move so that the moving member pushes the snap-fit member to protrude from the outer peripheral surface of the mounting portion; and when the locking piece moves from the first position to the second position, leave the moving member so that the moving member allows the snap-fit member to retract into the mounting portion.

6. The locking mechanism according to claim 5, wherein the actuating portion and the mounting portion are arranged along the first direction, an end of the actuating portion facing the mounting portion is provided with a protruding portion, and the protruding portion is configured to be inserted into the mounting portion to abut against the moving member.

7. The locking mechanism according to claim 6, wherein an accommodating cavity is formed inside the mounting portion, the accommodating cavity penetrates an end of the mounting portion close to the actuating portion along the first direction, and the accommodating cavity is configured to accommodate the protruding portion;
wherein the moving member is provided within the accommodating cavity movably along the first direction, a mounting hole is provided on the outer peripheral surface of the mounting portion, the mounting hole communicates with the accommodating cavity, and the snap-fit member is movably provided within the mounting hole.

8. The locking mechanism according to any one of claims 5 to 7, wherein the fastening assembly further comprises:
a first elastic member provided between the moving member and the mounting portion, and the first elastic member is configured to drive the moving member to move along the first direction toward the actuating portion, so that the moving member allows the snap-fit member to retract into the mounting portion.

9. The locking mechanism according to any one of claims 4 to 8, wherein a first limiting portion is provided inside the mounting portion, the moving member is provided with a second limiting portion, and the first limiting portion and the second limiting portion cooperate to restrict the range of movement of the moving member relative to the mounting portion along the first direction.

10. The locking mechanism according to claim 9, wherein the first limiting portion is a limiting block provided on an inner peripheral surface of the mounting portion, the second limiting portion is a groove provided on an outer peripheral surface of the moving member, and at least a portion of the limiting block is accommodated in the groove.

11. The locking mechanism according to claim 10, wherein the first limiting portion is an annular limiting block extending along a circumferential direction of the moving member, and the second limiting portion is an annular groove extending along the circumferential direction of the moving member.

12. The locking mechanism according to any one of claims 4 to 11, wherein a guide slope is formed on the moving member, and the guide slope is configured to abut against the snap-fit member to push the snap-fit member to protrude from the outer peripheral surface of the mounting portion.

13. The locking mechanism according to any one of claims 3 to 12, wherein the fastening assembly comprises a plurality of snap-fit members, and the plurality of snap-fit members are spaced apart along a circumferential direction of the mounting portion.

14. The locking mechanism according to any one of claims 3 to 13, wherein the snap-fit member is spherical.

15. The locking mechanism according to any one of claims 1 to 14, wherein the locking piece comprises:
a connecting portion extending along the first direction and inserted into the sleeve, wherein the connecting portion is threadedly connected to the adjustment piece; and
a snap-fit portion located outside the sleeve and connected to an end of the connecting portion away from the sleeve, wherein the snap-fit portion protrudes along its extending direction from an outer peripheral surface of the connecting portion, the snap-fit portion is configured to engage with the lock base, and the extending direction of the snap-fit portion is perpendicular to the first direction;
wherein the adjustment piece is capable of driving the connecting portion to rotate through rotating relative to the sleeve, so that the snap-fit portion engages with or disengages from the lock base and the locking piece switches between the locked state and the unlocked state.

16. The locking mechanism according to claim 15, wherein the sleeve is provided with a third limiting portion, the connecting portion is provided with a fourth limiting portion, and the third limiting portion and the fourth limiting portion cooperate to restrict a rotation angle of the connecting portion.

17. The locking mechanism according to claim 16, wherein the third limiting portion and the fourth limiting portion are further configured to cooperate to guide the connecting portion to move along the first direction when the adjustment piece rotates relative to the sleeve, so that the locking piece moves between the first position and the second position along the first direction; wherein
the locking piece is in the locked state when located at the first position, so that snap-fit portion engages with the lock base; and
the locking piece is in the unlocked state when located at the second position, so that the snap-fit portion disengages from the lock base.

18. The locking mechanism according to claim 17, wherein the third limiting portion is a limiting groove provided on an inner peripheral surface of the sleeve, the fourth limiting portion is a protrusion provided on an outer peripheral surface of the connecting portion, and at least a portion of the protrusion is accommodated in the limiting groove.

19. The locking mechanism according to claim 18, wherein the limiting groove comprises a first groove segment, a second groove segment, and a third groove segment connected in sequence, wherein the first groove segment and the third groove segment both extend along the first direction, the first groove segment and the third groove segment are spaced apart along a circumferential direction of the connecting portion, the first groove segment and the third groove segment are spaced apart along the first direction, and along the first direction, the third groove segment is closer to the snap-fit portion than the first groove segment; wherein
the protrusion is located in the first groove segment when the locking piece is located at the first position, and the protrusion is located in the third groove segment when the locking piece is located at the second position.

20. The locking mechanism according to any one of claims 15 to 19, wherein the adjustment piece comprises a connecting segment provided within the sleeve, the connecting segment is sleeved outside the connecting portion, and the connecting segment is threadedly connected to the connecting portion.

21. The locking mechanism according to any one of claims 1 to 20, wherein the locking mechanism further comprises:
a securing assembly provided between the sleeve and the adjustment piece, wherein the securing assembly is configured to selectively lock the adjustment piece with the sleeve to prevent the adjustment piece from rotating relative to the sleeve.

22. The locking mechanism according to claim 21, wherein the securing assembly comprises:
a first clutch member provided on the sleeve; and
a second clutch member provided on the adjustment piece;
wherein the first clutch member and the second clutch member are configured to: when engaged with each other, prevent the adjustment piece from rotating relative to the sleeve; and when disengaged from each other, allow the adjustment piece to rotate relative to the sleeve.

23. The locking mechanism according to claim 22, wherein the first clutch member and the second clutch member are arranged along the first direction;
wherein the first clutch member is fixed to the sleeve, the second clutch member is circumferentially locked with the adjustment piece, and the second clutch member is provided on the adjustment piece movably along the first direction, so that the second clutch member is able to engage with or disengage from the first clutch member.

24. The locking mechanism according to claim 23, wherein the adjustment piece comprises a guide segment provided within the sleeve, the second clutch member is sleeved outside the guide segment movably along the first direction, an outer peripheral surface of the guide segment is provided with a first circumferential limiting portion, an inner peripheral surface of the second clutch member is provided with a second circumferential limiting portion, and the second circumferential limiting portion cooperates with the first circumferential limiting portion to achieve circumferential locking of the second clutch member with the adjustment piece.

25. The locking mechanism according to claim 24, wherein the first circumferential limiting portion is a spline extending along the first direction, and the second circumferential limiting portion is a spline groove matching the spline.

26. The locking mechanism according to any one of claims 23 to 25, wherein along the first direction, an end of the first clutch member facing the second clutch member is provided with a first toothed portion, an end of the second clutch member facing the first clutch member is provided with a second toothed portion, and the second toothed portion is configured to engage with the first toothed portion to engage the second clutch member with the first clutch member.

27. The locking mechanism according to claim 26, wherein along the first direction, a first inclined surface is formed at an end of the first clutch member facing the second clutch member, a second inclined surface is formed at an end of the second clutch member facing the first clutch member, and the second inclined surface mates with the first inclined surface;
wherein the first toothed portion is provided on the first inclined surface, and the second toothed portion is provided on the second inclined surface.

28. The locking mechanism according to claim 27, wherein the first inclined surface is a concave surface provided on the first clutch member, and the second inclined surface is a convex surface provided on the second clutch member.

29. The locking mechanism according to any one of claims 23 to 28, wherein the securing assembly further comprises:
a second elastic member provided between the sleeve and the second clutch member, and the second elastic member is configured to drive the second clutch member to move along the first direction toward the first clutch member, so that the second clutch member engages with the first clutch member.

30. A battery assembly comprising:
a battery; and
the locking mechanism according to any one of claims 1 to 29, wherein the locking mechanism is mounted on the battery.

31. An electric device comprising:
a lock base; and
the battery assembly according to claim 30, wherein the locking mechanism is configured to engage with or disengage from the lock base along the first direction, and the battery is configured to supply electric energy.

32. A locking apparatus comprising:
a lock base; and
the locking mechanism according to any one of claims 1 to 29, wherein the locking mechanism is configured to engage with or disengage from the lock base along the first direction.
